(19) **Europäisches Patentamt**
**European Patent Office**
**Office européen des brevets**

(11) **EP 4 723 444 A2**

(12) **EUROPÄISCHE PATENTANMELDUNG**

(43) Veröffentlichungstag:
08.04.2026  Patentblatt 2026/15

(21) Anmeldenummer: 26159658.9

(22) Anmeldetag: **14.07.2022**

(51) Internationale Patentklassifikation (IPC):
**H02K 15/021** (2025.01)

(52) Gemeinsame Patentklassifikation (CPC):
**H02K 16/00; H02K 1/16; H02K 1/18; H02K 3/12; H02K 3/48; H02K 15/021;** H02K 3/47; H02K 15/085; H02K 2201/06; H02K 2213/03

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2021  DE 102021003942**

(62) Dokumentnummer(n) der früheren Anmeldung(en) nach Art. 76 EPÜ:
**22753621.6 / 4 315 561**

(71) Anmelder: **DeepDrive GmbH**
**85748 Garching bei München (DE)**

(72) Erfinder:
• **ROSEN, Alexander**
**49090 Osnabrück (DE)**
• **PETROVSKI, Dean**
**81371 München (DE)**

(74) Vertreter: **Isarpatent**
**Patent- und Rechtsanwälte Part G mbB**
**Friedrichstrasse 31**
**80801 München (DE)**

Bemerkungen:
Diese Anmeldung ist am 19.02.2026 als Teilanmeldung zu der unter INID-Code 62 erwähnten Anmeldung eingereicht worden.

(54) **STATOR FÜR EINE RADIALFLUSS-DOPPELROTORMASCHINE UND VERFAHREN ZUR HERSTELLUNG EINES STATORS FÜR EINE RADIALFLUSS-DOPPELROTORMASCHINE**

(57) Die vorliegende Erfindung betrifft eine einen Stator für eine Radialfluss-Doppelrotormaschine, insbesondere für einen Radnabenmotor, mit: einem Statorkern; einer in dem Statorkern platzierten Wicklung, welche zur Drehmomentabstützung des Stators selbsttragend ausgeführt ist, wobei die Wicklung an zumindest einem axialen Ende über den Statorkern hinausragt; und einer axial zu dem Statorkern versetzt angeordneten Trägereinrichtung, welche zum formschlüssigen Eingriff mit der Wicklung an dem zumindest einen axialen Ende zur Drehmomentabstützung ausgebildet ist. Die vorliegende Erfindung betrifft ferner ein Verfahren zur Herstellung eines Stators für eine Radialfluss-Doppelrotormaschine.

Fig. 1

**Beschreibung**

GEBIET DER ERFINDUNG

Die vorliegende Erfindung betrifft einen Stator für eine Radialfluss-Doppelrotormaschine, insbesondere für einen Radnabenmotor sowie ein Verfahren zur Herstellung eines Stators für eine Radialfluss-Doppelrotormaschine.

TECHNISCHER HINTERGRUND

Elektromaschinen mit einem Stator und zwei rotationsfest miteinander verbundenen Läufern, sogenannte Doppelrotormaschinen, (neben Doppelrotor auch bezeichnet als Mehrfachrotor, Dual-Rotor, etc.) können sowohl die Drehmomentdichte als auch die Effizienz elektrischer Antriebe gegenüber herkömmlichen Elektromaschinen mit nur einem Rotor steigern. Das ist damit zu begründen, dass insbesondere in sogenannter "jochloser" Ausführung kein magnetischer Rückschluss im Stator erforderlich ist und hierdurch die Ummagnetisierungsverluste deutlich gesenkt werden können. Zudem steht bei zwei Rotoren grundsätzlich mehr Platz für die felderregenden Magnete (bei permanentmagneterregten Synchronmaschinen, PSM) bzw. das Leitermaterial (bei Induktionsmaschinen, IM oder elektrisch erregte Synchronmaschinen, ESM) zur Verfügung. Gemäß der Ausrichtung der magnetischen Feldlinien im Luftspalt können solche Maschinen in zwei Gruppen unterteilt werden, axial Fluss führend (Feldlinien parallel zur Rotationsachse, sog. Axialflussmaschinen) einerseits und radial Fluss führend (Feldlinien in radialer Richtung im Luftspalt, sog. Radialflussmaschinen) andererseits.

Axialfluss-Doppelrotormaschinen sind beispielsweise in der DE 10 2015 226 105 A1 und der DE 10 2013 206 593 A1 beschrieben. Sie zeichnen sich durch eine hohe Drehmoment- und Leistungsdichte aus, sind aber in der Fertigung aufwändig, weil im Statorkern sehr komplexe Geometrien gestanzt oder pulvermetallurgisch gefertigt werden müssen. Bisher haben solche Maschinen den Sprung in die Großserienanwendung daher nicht vollzogen und finden lediglich in Nischenbereichen mit hohen Anforderungen an die Leistungsdichte, wie beispielsweise Rennsport, Luftfahrt, etc. Anwendung. Zudem erlauben die mechanischen Befestigungskonzepte für die Statorwicklung nur den Einsatz von Einzelzahnwicklungen mit entsprechenden Nachteilen in Bezug auf Geräuschanregungen.

Demgegenüber können bei Radialfluss-Doppelrotormaschinen für Wicklung und Blechpaket prinzipiell etablierte und großserientaugliche Fertigungsverfahren angewendet werden. Allerdings besteht hierbei eine große und weitgehend ungelöste technische Herausforderung in der Abstützung des im Statorkern entstehenden Drehmoments. Aufgrund der innen und außen rotierenden Teile kann das Statorblechpaket nicht wie ansonsten üblich in ein feststehendes Gehäuse montiert (beispielswiese eingepresst, verschraubt oder geklebt) werden. Das Drehmoment wird deshalb zu den axialen Enden von Statorblechpaket bzw. Statorwicklung geführt und dort abgestützt. Im Stand der Technik werden dazu verschiedene Ansätze vorgeschlagen, die jedoch alle mit erheblichen Nachteilen in Bezug auf die Funktion und/oder die Kosten verbunden sind.

Die EP 1 879 283 B1 beschreibt eine Möglichkeit der Ausführung der Statorwicklung als sogenannte Jochwicklung. Das ringförmig ausgeführte Statorblechpaket weist hierbei Nuten am Innen- und Außendurchmesser auf, zwischen denen sich ein in tangentialer Richtung wirksamer magnetischer Rückschluss (auch als Statorjoch bezeichnet) befindet. Hin- und Rückleiter jedes Wicklungsstranges sind hierbei in jeweils radial übereinander liegenden Nuten geführt und um das Joch herumgewickelt. Zwischen den Wicklungssträngen ist das Statorjoch axial zugänglich und kann beispielsweise durch axiale Verschraubungen am Gehäuse fixiert werden (z.B. beschrieben in JP 2018 082 600). Durch die axiale Pressung der Schrauben wird sowohl eine Torsionssteifigkeit des Blechpaketes sowie die Drehmomentabstützung am axialen Ende gewährleistet. Nord- und Südpol des Rotorfelds stehen sich jeweils gegenüber. Nachteilig bei diesem Konzept ist, dass der magnetische Fluss vollständig über das zwischen den Statornuten liegende Rückschlussjoch geführt werden muss. Dies führt zum einen zu einem erhöhten Gewicht des Statorblechpakets und erhöht die Eisenverluste signifikant. Die magnetischen Feldlinien beider Rotorflüsse schließen sich über den magnetischen Rückfluss im Statorblechpaket und rufen dort Eisenverluste hervor. Zudem müssen alle Einzelspulen der Jochwicklung im Bereich des Wickelkopfes parallel oder in Reihe verschaltet werden, was wiederum zu einem Bauraumkonflikt mit der Drehmomentabstützung führt. Die um das Joch gewickelte Wicklung erlaubt aber eine direkte mechanische Kontaktierung des Statorblechpakets.

Eine deutliche Gewichts- und Verlusteinsparung kann erzielt werden, wenn die Magnetisierungsrichtungen der radial übereinander liegenden Magnete in die gleiche Richtung zeigen und die Bestromungsrichtungen der übereinander in den Nuten liegenden Leiter identisch sind. In diesem Fall kann der magnetische Rückschluss im Stator entfallen und es entsteht eine sogenannte "jochlose" Doppelrotormaschine mit verteilter Wicklung. Die magnetischen Feldlinien schließen sich über dem Rotor. Ein magnetischer Rückschluss im Stator ist nicht erforderlich, wodurch Gewicht und Eisenverluste in derartigen Maschinen sehr gering sind. Die verteilte Wicklung erlaubt aber keine direkte mechanische Kontaktierung des Statorblechpakets zur Drehmomentabstützung. Beispielsweise beschreibt die WO 2004/004098 A1 eine jochlose Ausführung mit verteilter Wicklung.

Auch bei einer sogenannten "jochlosen" Ausführung kann es sinnvoll sein, zur mechanischen Verbindung der Statorzähne dennoch ein dünnes Joch auszuführen, elektromagnetisch ist dieses jedoch nicht notwendig. Der Begriff "jochlos" bezieht sich somit auf die elektromagnetische Flussführung, in der im Stator kein Fluss in tangentialer Richtung vorhanden ist. Die Wicklung kann hierbei aber nicht als Jochwicklung ausgeführt werden, da Hin- und Rückleiter der Wicklungsstränge radial am Umfang verteilt sind und damit eine verteilte Wicklung bilden. Hierdurch entstehen Wickelköpfe verteilter Wicklungen, die die Zugänglichkeit des Blechpakets in axialer Richtung erschweren. Die rein radiale Flussführung verbietet außerdem den Einsatz axialer, metallischer Verschraubungen, da diese Leiterschleifen mit viel verkettetem Fluss und hohen zusätzlichen Stromwärmeverlusten bilden.

Zur axialen Abstützung werden im Stand der Technik verschiedene Hilfskonstruktionen zur Drehmomentabstützung vorgeschlagen, beispielsweise beschrieben in der DE 10 2010 055 030 A1 oder US 7,557,486 B2. Problematisch ist hierbei, dass elektrisch und/oder magnetisch leitfähige Metalle nicht oder nur sehr eingeschränkt in den flussführenden Bereich hineinragen dürfen, was die Materialauswahl und geometrische Auslegung stark einschränkt. Demgegenüber können Kunststoffbauteile, Klebstoffe und/oder Vergussmaterialien auch im flussführenden Bereich eingesetzt werden. Mit solchen Materialien ist es aber sehr schwierig, die hohen Anforderungen hinsichtlich Temperaturstabilität und mechanischer Festigkeit zu erreichen.

Zusammenfassend ist festzustellen, dass für die Drehmomentabstützung für jochlose Radialfluss-Doppelrotormaschinen im Stand der Technik keine zufriedenstellende Lösung zu finden ist. Dies ist ein Zustand, den es zu verbessern gilt.

ZUSAMMENFASSUNG DER ERFINDUNG

Vor diesem Hintergrund liegt der vorliegenden Erfindung die Aufgabe zugrunde, einen verbesserten Stator für eine Radialfluss-Doppelrotormaschine, eine verbesserte Radialfluss-Doppelrotormaschine und ein verbessertes Verfahren zur Herstellung eines Stators für eine Radialfluss-Doppelrotormaschine anzugeben.

Erfindungsgemäß wird diese Aufgabe durch einen Stator mit den Merkmalen des Patentanspruchs 1 und/oder durch eine Radialfluss-Doppelrotormaschine mit den Merkmalen des Patentanspruchs 21 und/oder durch ein Verfahren mit den Merkmalen des Patentanspruchs 24 gelöst.

Demgemäß ist vorgesehen:

- Ein Stator für eine Radialfluss-Doppelrotormaschine, insbesondere für einen Radnabenmotor, mit: einem Statorkern; einer in dem Statorkern platzierten Wicklung, welche zur Drehmomentabstützung des Stators selbsttragend ausgeführt ist, wobei die Wicklung an zumindest einem axialen Ende über den Statorkern hinausragt; und einer axial zu dem Statorkern versetzt angeordneten Trägereinrichtung, welche zum formschlüssigen Eingriff mit der Wicklung an dem zumindest einen axialen Ende zur Drehmomentabstützung ausgebildet ist.

- Ein Verfahren zur Herstellung eines Stators für eine Radialfluss-Doppelrotormaschine, insbesondere eines erfindungsgemäßen Stators, mit den Schritten: Bereitstellen eines Statorkerns mit jeweils eine Schraubenlinie beschreibenden radial außen liegenden Statornuten und jeweils eine Schraubenlinie mit entgegengesetzter Windungsrichtung beschreibenden radial innen liegenden Statornuten; Einführen von einzelnen Leiterstäben den Schraubenlinien folgend durch die inneren und äußeren Statornuten; und Verbinden der in die inneren und äußeren Statornuten eingeführten Leiterstäbe an den Leiterstabenden zur Ausbildung von Leiterschleifen.

Die der vorliegenden Erfindung zugrunde liegende Erkenntnis besteht darin, dass eine Wicklung einer Radialfluss-Doppelrotormaschine zur Drehmomentabstützung kraftübertragend ausgelegt werden kann. Die der vorliegenden Erfindung zugrunde liegende Idee besteht nun darin, die in dem Statorkern angeordnete Wicklung zur Drehmomentabstützung selbsttragend auszulegen und mit einer axial zu dem Statorkern versetzt angeordneten Trägereinrichtung zur Drehmomentabstützung formschlüssig in Eingriff zu bringen.

Unter einer selbsttragenden Auslegung der Wicklung ist zu verstehen, dass eine zur Abstützung des Antriebsmoments ausreichende Steifigkeit und Festigkeit der Wicklung gegenüber Torsion um die Maschinenachse gegeben ist. Die selbsttragende Wicklung ist insbesondere in einen weichmagnetischen Statorkern zur magnetischen Flussführung eingebettet. Hierbei ergibt sich der besondere Vorteil, dass der Statorkern selbst keine inhärente Torsionssteifigkeit bezüglich der Maschinenachse benötigt und auch keine sonstige Hilfskonstruktion zur Festlegung des Statorkerns benötigt wird. Vielmehr wird das Drehmoment, insbesondere vollständig, über die Wicklung abgestützt.

Somit wird eine bisher unbekannte bzw. auf dem Gebiet der Radialfluss-Doppelrotormaschinen bisher technisch nicht umsetzbare Funktionsintegration geschaffen, indem der Wicklung zusätzlich zur Stromführung eine tragende Funktion zur Abstützung des Drehmoments gegeben und mechanisch an einem axialen Ende eine Fixierung der Wicklung außerhalb des Statorkerns erreicht wird.

Zur Herstellung einer derartigen Wicklung wird eine integrale Fertigung der Wicklung in dem bestehenden Statorkern vorgeschlagen. Die Einzelstäbe der Wicklung werden dazu in axialer Richtung der Schraubenlinie der Statornuten folgend durch die radial inneren und radial äußeren Statornuten gesteckt und an den Leiterenden verbunden. Vorzugsweise wird hierbei eine stoffschlüssige Verbindung durch Schweißen oder Löten vorgesehen. Somit wird die Wicklung formschlüssig mit dem Statorkern verbunden.

Der gewählte Steigungswinkel (auch Schränkwinkel) der Statornuten bzw. der damit beschriebenen Schraubenlinien stellt sicher, dass mittels Verbindung der eingebrachten Leiterstäbe Leiterschleifen gebildet werden. Der in Bezug auf die Mittelachse überstrichene Winkel der Leiterschleifen in der Maschine umschließt jeweils einen magnetischen Pol der Rotoren. Auf diese Weise ist trotz der Funktionsintegration eine sehr einfache Herstellung des Stators ermöglicht, welche mit sehr wenigen Bauteilen und vergleichsweise einfacher herkömmlicher Verbindungstechnik und dadurch auch mit sehr wenigen Fertigungsschritten auskommt.

Der so ausgeführte Stator kann nun mit verschiedenen dem Fachmann bekannten inneren und äußeren Rotoren zu einer erfindungsgemäßen elektrischen Maschine vervollständigt werden. Hierzu zählen beispielsweise permanentmagneterregte Rotoren mit Oberflächenmagneten und/oder vergrabenen Magneten, Kurzschlussläufer oder elektrisch erregte Läufer. Auch hybride Varianten mit unterschiedlichen Läufervarianten im inneren und äußeren Rotor können vorgesehen sein. Eine besonders vorteilhafte Ausführung ergibt sich, wenn die Rotoren aus weichmagnetischem Vollmaterial und mit oberflächenmontierten Permanentmagneten ausgeführt sind. Das geringe Oberfeldspektrum der hier beschriebenen Wicklungsvarianten und der durch die Magnete gewährleistete Abstand des Vollmaterials vom Luftspalt verhindert das Entstehen unzulässig großer Verluste durch Wirbelströme in den Rotoren. In dieser Ausführung können dann vorteilhaft vergleichsweise hohe Wirkungsgrade erreicht werden und die Rotoren dennoch sehr kostengünstig gefertigt werden.

Die Trägereinrichtung wird durch eine geeignete Methode fest mit der Basis als dem stehenden Teil der elektrischen Maschine verbunden. Eine mögliche Ausführung sieht dazu Ausnehmungen, beispielsweise Durchgangsbohrungen, für kraftschlüssige Befestigungsmittel, wie beispielsweise Schrauben, vor. Es wären aber selbstverständlich alternativ oder zusätzlich auch formschlüssige Verbindungsmittel und/oder eine stoffschlüssige Verbindung denkbar.

Insbesondere ist die vorliegende Erfindung besonders vorteilhaft für einen Radnabenmotor, bevorzugt für ein Kraftfahrzeug, einsetzbar. Durch die erfindungsgemäße Konstruktion lässt sich aufgrund der Funktionsintegration die Masse einer Radialfluss-Doppelrotormaschine verringern und die Drehmomentdichte erhöhen, was insbesondere bei Radnabenmotoren vorteilhaft eine Reduzierung ungefederter Massen bedeutet. Ferner kann erfindungsgemäß bei vergleichsweise hohem Durchmesser eine vergleichsweise kurze axiale Länge realisiert werden, was insbesondere im Radinneren bezüglich der Drehmomentabstützung und des Bauraums vorteilhaft ist.

Andererseits sind erfindungsgemäß trotz der äußerst kompakten Bauweise auch sehr hohe Drehmomente möglich, welche insbesondere hoch genug sind um ohne ein Getriebe direkt ein Rad eines Fahrzeugs anzutreiben. Auf diese Weise werden besonders vorteilhaft Getriebeverluste vermieden, weiteres Gewicht eingespart und es sind besonders hohe Wirkungsgradvorteile erzielbar.

Weiterhin erlaubt dieses hohe Drehmoment, welches bei Baugrößen innerhalb der Dimensionen üblicher Kraftfahrzeugfelgen bereits deutlich vierstellig, insbesondere größer als 5000 Nm, möglich ist, und so bereits in den Bereich der Haftungsgrenze von üblichen Straßenreifen reicht, sogar eine Hinterachs-Radbremse durch den Radnabenmotor zu ersetzen. Es sind somit bei der Anwendung als Radnabenmotor besondere Synergien ermöglicht.

Offenbart ist somit ferner gemäß einem Aspekt eine Fahrzeugachse, insbesondere für ein Kraftfahrzeug, mit einer erfindungsgemäßen Radialfluss-Doppelrotormaschine, welche getriebelos mit einem Antriebsrad gekoppelt ist.

Offenbart ist ferner gemäß einem Aspekt ein Kraftfahrzeug mit einer derartigen Fahrzeugachse.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform ist die Wicklung derart torsionssteif ausgelegt, dass ein im Betrieb einer Radialfluss-Doppelrotormaschine auf den Statorkern wirkendes Drehmoment über die torsionssteife Wicklung an dem Trägerelement, insbesondere vollständig, abstützbar ist. Auf diese Weise können vorteilhaft sämtliche andersartige Kraftabstützungseinrichtungen, insbesondere für den Statorkern, entfallen.

Gemäß einer Ausführungsform ist der Statorkern zur Führung eines vorrangig radialen Magnetflusses ausgebildet. Es handelt sich somit um eine sogenannte "jochlose" Ausführung des Statorkerns, die insbesondere eine Magnetflussführung in umfänglicher bzw. tangentialer Richtung vermeidet. Ein magnetischer Rückschluss im Statorkern ist dabei nicht erforderlich, wodurch Gewicht und Eisenverluste reduziert werden.

Gemäß einer Ausführungsform weist der Statorkern eine radiale Jochdicke auf, welche weniger als 30%, vorzugsweise weniger als 20%, besonders bevorzugt weniger als 10% einer gesamten radialen Statorkerndicke beträgt. Bei einer sogenannten "jochlosen" Ausführung wird auf diese Weise dennoch eine mechanische Verbindung der Statorzähne bereitgestellt, was elektromagnetisch jedoch nicht notwendig ist und worüber auch kein funktionsrelevanter Magnetfluss stattfindet. Der Begriff "jochlos" bezieht sich somit insbesondere auf die elektromagnetische Flussführung des Statorkerns.

Gemäß einer Ausführungsform ist die Wicklung aus miteinander, insbesondere stabwerkartig, verbundenen Leiterstäben gebildet. Insbesondere können die Leiterstäbe stoffschlüssig verbunden sein, beispielsweise durch Schweißen oder Löten. Es wären aber auch andere Verbindungstechniken denkbar. Vorzugsweise sind jeweils zwei Leiterstäbe an den Leiterstabenden verbunden und alle Leiterstäbe gemeinsam bilden so ein Stabwerk. Das mit den Leiterstäben gebildete Stabwerk ist vorteilhaft in sich torsionssteif gestaltet und zur Momentenübertragung um die Mittelachse des Stators ausgelegt. Ferner sind die Leiterstäbe mit einer zur Kraftübertragung ausreichenden Dicke ausgebildet. Bei einem Radnabenmotor kann die Dicke der Leiterstäbe beispielsweise im Bereich mehrerer Millimeter ausgebildet sein. Es kann sich insbesondere um Stäbe mit Vierkantprofil handeln mit Kantenlängen von mehreren Millimetern.

Gemäß einer Ausführungsform weist die Wicklung eine radial innere Lage von schraubenförmig angeordneten Leiterstäben und eine radial äußere Lage von entgegengesetzt schraubenförmig angeordneten Leiterstäben auf. Auf diese Weise wird durch die Wicklung ein Stabwerk gebildet, welches eine hohe Torsionssteifigkeit aufweist. Die Leiterstäbe der inneren Lage und die Leiterstäbe der äußeren Lage beschreiben dabei jeweils eine Schraubenlinie, deren Windungsrichtungen bzw. Steigungen entgegengesetzt zueinander sind. Ein in Bezug auf die Mittelachse des Stators überstrichener Winkel der Schraubenlinie zwischen Beginn und Ende eines Leiterstabs ist insbesondere derart ausgebildet, dass in einer Radialfluss-Doppelrotormaschine eine Leiterschleife pro Pol der Rotoren gebildet ist. Der vorzusehende überstrichene Winkel lässt sich somit aus dem Quotienten aus einer ganzen Umdrehung ($2\pi$ oder 360°) und der doppelten Polpaarzahl $p$ errechnen.

Gemäß einer Ausführungsform weist die radial innere Lage und die radial äußere Lage der Wicklung jeweils die Stärke eines einzelnen Leiterstabes auf. Das heißt, eine Phase der Wicklung ist jeweils mit dem Querschnitt eines einzelnen Leiterstabs gebildet. Eine derartige erfindungsgemäße Ausbildung einer Wicklung ist unter anderem durch die spezielle Bauweise der Radialfluss-Doppelrotormaschine ermöglicht, welche die bei Leitern ansonsten vorhandene Stromverdrängung zur Oberfläche mittels ihrer magnetischen Symmetrie unterbindet. Auf diese Weise sind vergleichsweise dicke Leiterquerschnitte ermöglicht und es wird dennoch eine relativ gleichmäßige Stromverteilung über den Querschnitt erreicht. Beispielsweise kann die Dicke der Leiterstäbe im Bereich mehrerer Millimeter ausgebildet sein. Es kann sich insbesondere um Stäbe mit Vierkantprofil handeln mit Kantenlängen von mehreren Millimetern, beispielsweise im Bereich von 2 mm bis 6 mm, insbesondere im Bereich von 3 mm bis 5 mm. Andere Querschnittsformen sind ebenfalls möglich.

Gemäß einer Ausführungsform sind die Leiterstäbe entsprechend dem schraubenförmigen Verlauf jeweils derart tordiert ausgebildet, dass ein Querschnitt eines Leiterstabes bezogen auf eine radiale Achse des Querschnitts an jeder Stelle des Leiters gleich ist. Insbesondere handelt es sich um eine Torsion eines, insbesondere nichtrunden, Leiterstabs um die Mittelachse des Stators beziehungsweise der Maschine. Je nach Verlauf der Schraubenform können die Leiterstäbe zusätzlich auch gebogen sein. Die innere und die äußere Lage sind dabei zueinander verschränkt, das heißt entgegengesetzt verdreht, tordiert und gegebenenfalls gebogen, angeordnet. Auf diese Weise ist die Ausrichtung eines Leiterstabs unter mechanischen Gesichtspunkten an jeder Stelle des Statorkerns ideal zur Kraftübertragung mit dem Statorkern ausgerichtet, sodass der jeweilige Leiterstab über seine Länge gleichmäßig belastet wird. In dem entstehenden Stabwerk nehmen die Leiter bei Beaufschlagung mit Tangentialkraft somit vorteilhaft vorwiegend Zug- und Druckspannungen auf. Auf diese Weise werden Lastspitzen und Verformungen der Leiterstäbe vermieden. Insbesondere gegenüber einer Ausführung mit achsparallelen, geraden Leitern können die mechanischen Spannungen somit signifikant gesenkt werden.

Gemäß einer Ausführungsform sind die einer gleichen Phase der Wicklung zugehörigen Leiterstäbe der radial inneren und äußeren Lage jeweils an den Leiterstabenden miteinander verbunden, insbesondere über ein radial angeordnetes Leiterstabstück und/oder mittels stoffschlüssiger Verbindung. Hierdurch entsteht neben einer Leiterschlaufe auch eine torsionssteife stabwerkartige Struktur, so dass bei Fixierung eines axial zugänglichen Wicklungsendes ein hohes Drehmoment von der Wicklung aufgenommen werden kann, ohne unzulässig große Verformungen und/oder Spannungszustände hervorzurufen. Somit ist nur durch den Wicklungswerkstoff, beispielsweise Kupfer, ohne zusätzliche Trägermittel oder -elemente die selbsttragende Ausführung der Wicklung ermöglicht.

Gemäß einer Ausführungsform enthält der Statorkern ein Statorblechpaket mit dem Wicklungsverlauf entsprechend schraubenförmig verlaufenden Statornuten, wobei in jeder Statornut des Statorblechpakets ein einzelner Leiterstab angeordnet ist. Die Wicklung bzw. das damit gebildete selbsttragende Stabwerk ist somit in dem Statorblechpaket eingebettet. Analog zu den Leiterstäben der Wicklung ändern die Statornuten daher in Abhängigkeit von der axialen Position ihre tangentiale Lage, sodass die Schraubenform entsteht. Die Richtung der Lageänderung folgt dabei den Leiterstäben, d.h. die Mittellinie der radial außen liegenden Nuten und der radial innen liegenden Nuten beschreiben ebenfalls jeweils eine Schraubenlinie, deren Windungsrichtungen entgegengesetzt sind.

Bei weiteren Ausführungsformen wären auch andere dem Fachmann bekannte Herstellungsarten zur Herstellung der erfindungsgemäßen Statorkerngeometrie mit den entgegengesetzt schraubenförmig verlaufenden radial inneren und äußeren Statornuten denkbar, insbesondere auch additive Herstellungsarten, wie Sinterverfahren oder dergleichen.

Gemäß einer Ausführungsform ist in jeder Statornut des Statorblechpakets nur ein einziger Leiterstab platziert. Wie bereits in Bezug auf die Wicklung erläutert, sind die Leiterstäbe der innen und außen liegenden Statornuten durch Torsion um die Mittelachse der Maschine schraubenförmig gegeneinander verschränkt, so dass die Leiterenden der inneren und äußeren Lage zueinander geführt sind. An den Leiterstabenden sind die Leiterstäbe leitend miteinander verbunden, insbesondere über ein radial angeordnetes Leiterstabstück und/oder mittels stoffschlüssiger Verbindung, beispielsweise durch Schweißen oder Hartlöten.

Gemäß einer Ausführungsform bilden die leitfähig verbundenen Leiterstäbe der inneren und äußeren Lage gemeinsam wellenförmige Wicklungsstränge. Die Wicklungsstränge lassen sich durch entsprechende, dem Fachmann bekannte, Verschaltungen zu einer drehfelderzeugenden Wicklung mit einer gewünschten bzw. anpassbaren Strangzahl verschalten. Die spannungshaltende Strangwindungszahl ergibt sich unmittelbar aus dem Quotienten der Anzahl der Nuten im Zähler und einem Produkt der Strangzahl und der Anzahl paralleler Zweige im Zähler. Vorteilhafterweise wird die Anzahl paralleler Zweige zu 1 gewählt. In diesem Fall ergibt sich die einfachst mögliche Verschaltung der Wicklung.

Gemäß einer Ausführungsform sind die Statorbleche des Statorblechpakets mit zur Ausbildung der Statornuten vorgesehenen Ausnehmungen jeweils gleich ausgebildet. Der schraubenförmige Verlauf der Statornuten ist dabei mittels einer zueinander verdrehten Stapelung der Statorbleche vorgesehen. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht.

Gemäß einer vorteilhaften Ausführungsform enthält das Statorblechpaket ein inneres Teilpaket mit radial inneren Statornuten und ein äußeres Teilpaket mit radial äußeren Statornuten. Die Statorbleche des inneren Teilpakets sind dabei mit einer jeweils gleichen Geometrie und die Statorbleche des äußeren Teilpakets sind dabei mit einer jeweils gleichen Geometrie ausgeführt. Die Statorbleche des inneren Teilpakets und die Statorbleche des äußeren Teilpakets sind dabei gegensätzlich zueinander verdreht gestapelt.

Auf diese Weise lassen sich mit geringem Fertigungsaufwand die entgegengesetzten Schraubenlinien der Statornuten realisieren. Dennoch ist eine nach wie vor sehr wirtschaftliche Fertigungsweise ermöglicht, da für alle parallel angeordneten bzw. gestapelten Statorbleche des inneren Teilpakets die gleiche Stanzform eingesetzt werden kann und für alle parallel angeordneten bzw. gestapelten Statorbleche des äußeren Teilpakets die gleiche Stanzform eingesetzt werden kann. Dementsprechend sind zwei benachbarte Statorbleche des inneren Teilpaktes in eine erste Richtung leicht zu einander um einen vorbestimmten Winkel um die Mittelachse verdreht und zwei benachbarte Statorbleche des äußeren Teilpaktes in eine zweite entgegengesetzte Richtung leicht zu einander um einen vorbestimmten Winkel um die Mittelachse verdreht. Auf diese Weise sind die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht.

Gemäß einer weiteren Ausführungsform sind die Statorbleche mit zur Ausbildung der Statornuten vorgesehenen Ausnehmungen jeweils unterschiedlich ausgebildet. Der schraubenförmige Verlauf der Statornuten ist dabei mittels unterschiedlicher Abstände der Ausnehmungen in den einzelnen Statorblechen vorgesehen. Insofern wird hierbei für jede Position eines Statorblechs innerhalb des Stapels eine individuell passende Statorblechform hergestellt, wobei innerhalb des Stapels sich die einzelnen Geometrien auch wiederholen können. Die Herstellung kann in diesem Fall beispielsweise mittels eines hinsichtlich der Form im Vergleich zu einem Stanzprozess flexibleren Strahlschneidprozesses, insbesondere Laserstrahlschneidprozess, realisiert werden. Ebenfalls denkbar wären flexible Stanzformen mit veränderlicher Geometrie oder bei sehr hoher Stückzahl selbstverständlich auch mehrere individuelle Stanzformen für jede der unterschiedlichen Statorblechformen.

Gemäß einer Weiterbildung sind die Ausnehmungen für radial innere und radial äußere Statornuten jeweils in einem gemeinsamen Statorblech integriert ausgebildet, wobei der entgegengesetzt schraubenförmige Verlauf der radial inneren und radial äußeren Statornuten durch eine fortwährende Verschiebung der inneren und äußeren Statornuten zueinander von Statorblech zu Statorblech vorgesehen ist. Auch hierbei wird für jede Position eines Statorblechs innerhalb des Stapels eine individuell passende Statorblechform hergestellt, wobei innerhalb des Stapels sich die einzelnen Geometrien auch wiederholen können. Auch hier wird zu Herstellung insbesondere auf flexible Trennprozesse, wie beispielsweise Laserstrahlschneiden, zurückgegriffen. Durch die so mögliche einteilige Herstellung der inneren und äußeren Ausnehmungen wird vorteilhaft die Anzahl der Teile reduziert.

Gemäß einer Ausführungsform weisen die Statorbleche gerade, insbesondere gestanzte, Kanten auf. Eine Breite der für die Statornuten vorgesehenen Ausnehmungen ist dabei um einen durch die Steigung der Schraubenform des Verlaufs der Statornuten und durch die Blechstärke der Statorbleche vorbestimmten Betrag größer als die Breite der Leiterstäbe ausgebildet. Eine durch den Versatz zwischen den Ausnehmungen der Statorbleche verringerte lichte Breite bzw. durchgängige Breite der Statornuten entspricht somit im Wesentlichen der Breite eines Leiterstabs. In der Praxis ist die durchgängige lichte Breite der Statornut zur Bereitstellung einer zum Einführen der Leiterstäbe notwendigen Spielpassung geringfügig größer als die Breite des Leiterstabs vorgesehen. Der Rand einer Statornut beschreibt somit eine Treppenform mit der jeweiligen Blechstärke als Stufen, an welcher sich der Leiterstab gleichmäßig abstützt. Auf diese Weise wird die Drehmomentabstützung gleichmäßig über die gesamte Dicke des Statorblechpakets bzw. über die gesamte in dem Statorblechpaket aufgenommene Länge der Leiterstäbe ermöglicht.

Gemäß einer Ausführungsform ist ein von den Statornuten jeweils überstrichener Winkel kleiner als ein von den Leiterstäben jeweils überstrichener Winkel. Der überstrichene Winkel bezieht sich jeweils auf eine Drehung um die Mittelachse des Stators. Der Unterschied der überstrichenen Winkel kommt dadurch zustande, dass die Leiterstäbe axial über den Statorkern hinausstehen und somit länger ausgebildet sind als die Statornuten. Da sich der schraubenförmige Verlauf ebenfalls fortsetzt, ergibt sich ein größerer dadurch überstrichener Winkel. Der besagte Unterschied ist vorgesehen, damit eine ausreichende Zugänglichkeit der Wicklungsenden zum Verbinden, insbesondere Verschweißen, der Leiterstabenden nach dem Einführen in die Statornuten gewährleistet ist. Ferner ist auf diese Weise ein axial zu dem Statorkern versetztes Eingreifen der Wicklung mit der Trägereinrichtung bzw. deren Trägerelement ermöglicht.

Aus dem Quotienten der überstrichenen Winkel, also einem Verhältnis des von den Statornuten jeweils überstrichenen Winkels zu dem von den Leiterstäben jeweils überstrichenen Winkel, lässt sich ein sogenannter Polbedeckungsgrad für das Statorblechpaket definieren.

Gemäß einer Ausführungsform liegt ein Verhältnis des von den Statornuten jeweils überstrichenen Winkels zu dem von den Leiterstäben jeweils überstrichenen Winkel in einem Bereich zwischen 0.6 und 0.8, insbesondere zwischen 0,6 und 0,75, vorzugsweise zwischen 0,6 und 0,7. Dieses Verhältnis (Polbedeckungsgrad) stellt in diesem Bereich ein Optimum zwischen durch Stromwärme entstehenden Verlusten und Drehmomentausnutzung bereit.

Gemäß einer Ausführungsform weist die Trägereinrichtung ein Trägerelement auf, in welchem zu der schraubenförmigen Anordnung der Leiterstäbe korrespondierende und mit den Leiterstäben in Eingriff stehende Trägernuten vorgesehen sind. Auf diese Weise wird für die Abstützung des Drehmoments am axialen Ende eine formschlüssige Einbettung der Leiterstäbe in das Trägerelement vorgesehen. Vorzugsweise besteht ein Eingriff mit allen Leiterstäben, sodass die Drehmomentabstützung homogen bzw. gleichmäßig über das gesamte Stabwerk der Wicklung abgetragen wird.

Zur Übertragung des Drehmoments ist das Trägerelement mit einer mechanisch festgelegten Basis einer Radialfluss-Doppelrotormaschine koppelbar. Eine mögliche Ausführung sieht dazu Durchgangsbohrungen für kraftschlüssige Befestigungsmittel wie Schrauben vor, es wären aber selbstverständlich auch formschlüssige Verbindungsmittel oder eine stoffschlüssige Verbindung denkbar.

Gemäß einer Ausführungsform folgen die Trägernuten zumindest abschnittsweise dem schraubenförmigen Verlauf der tordierten Leiterstäbe. Insbesondere Weisen die Trägernuten einen gleichermaßen tordierten Verlauf wie die Leiterstäbe auf. Beispielsweise ist das Trägerelement im Wesentlichen ringförmig ausgebildet und weist Ausnehmungen an dem inneren und/oder äußeren Umfang auf, welche radial ausgerichtet sind und dem Verlauf der Leiterstäbe entsprechen..

Gemäß einer Ausführungsform weist die Trägereinrichtung ein radial inneres Trägerelement zum Eingriff mit der radial inneren Lage der Leiterstäbe und ein radial äußeres Trägerelement zum Eingriff mit der radial äußeren Lage der Leiterstäbe auf. Bei dieser Ausführungsform können die Trägerelemente ringförmig ausgebildet sein, wobei das innere Trägerelement an seinem äußeren Umfang dem Verlauf der inneren Lage der Leiterstäbe entsprechende Nuten bzw. Zähne zur formschlüssigen Aufnahme der radial inneren Leiterstäbe und das äußere Trägerelement an seinem inneren Umfang dem Verlauf der äußeren Lage der Leiterstäbe entsprechende Nuten bzw. Zähne zur formschlüssigen Aufnahme der radial äußeren Leiterstäbe aufweist. Die Nuten bzw. Zähne folgen dabei insbesondere dem jeweiligen schraubenförmigen Verlauf. Durch die Anordnung am inneren oder äußeren Umfang sind die eingelassenen Nuten für eine mechanische Bearbeitung gut zugänglich, was die Herstellung der Trägerelemente vereinfacht.

Gemäß einer Ausführungsform einer Radialfluss-Doppelrotormaschine sind die Trägerelemente an der Basis fixiert und führen das Drehmoment so zum festen Teil der elektrischen Maschine. Die Trägerelemente können dazu einzeln mit der Basis, beispielsweise einem Gehäuse, der Maschine befestigt sein. Alternativ oder zusätzlich können auch die inneren und äußeren Trägerelemente miteinander befestigt sein.

Gemäß einer Ausführungsform eines Stators enthält die Trägereinrichtung einen wärmeleitenden Werkstoff, insbesondere ein Metall, vorzugsweise eine Aluminiumlegierung. Insbesondere können beide Trägerelemente einen solchen Werkstoff enthalten. Auf diese Weise wird neben einer hohen mechanischen Festigkeit auch eine Wärmeabfuhr aus der Wicklung über die Trägereinrichtung ermöglicht.

Gemäß einer Ausführungsform einer entsprechenden Radialfluss-Doppelrotormaschine mit einer einen wärmeleitenden Werkstoff enthaltenden Trägereinrichtung weist zusätzlich die Basis einen Kühlkörper auf, der zur Aufnahme von über die Trägereinrichtung aus dem Stator, insbesondere aus der Wicklung, abgeführter Wärme ausgebildet ist. Hierdurch weist die Trägereinrichtung eine hohe mechanische Festigkeit auf und gewährleistet gleichzeitig eine gute thermische Anbindung der Wicklung an den Kühlkörper. Beispielsweise kann das Gehäuse der Maschine als Kühlkörper dienen. Alternativ oder zusätzlich kann die Trägereinrichtung, vorzugsweise die inneren und äußeren Trägerelemente, in thermischem Kontakt mit einem aktiv gekühlten Kühlkörper der Maschine stehen. Auf diese Weise können die in der Wicklung bzw. in den Leiterstäben entstehenden Stromwärmeverluste effektiv abgeführt werden.

Gemäß einer Ausführungsform einer Radialfluss-Doppelrotormaschine ist sowohl an dem ersten Rotor als auch an dem zweiten Rotor eine vorbestimmte Anzahl von Poolpaaren vorgesehen. Ein von den Leiterstäben jeweils überstrichener Winkel ist dabei zur Ausbildung einer Leiterschleife pro Pol der Rotoren ausgebildet. Der vorzusehende überstrichene Winkel lässt sich somit aus dem Quotienten aus einer ganzen Umdrehung ($2\pi$ oder 360°) und der doppelten Polpaarzahl $p$ errechnen.

Gemäß einer Ausführungsform des Verfahrens zur Herstellung umfasst das Bereitstellen des Statorkerns die Herstellung eines Statorblechpakets, wobei einzelne Statorbleche, welche Ausnehmungen zur Ausbildung von Statornuten aufweisen, zueinander verdreht gestapelt werden. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht. Die Herstellung der einzelnen Statorbleche mit einer solchen Geometrie erfolgt vorteilhafterweise durch Stanzen oder Laserstrahlschneiden von Einzellamellen aus Elektroblech.

Gemäß einer Weiterbildung des Verfahrens enthält das Statorblechpaket ein inneres Teilpaket und ein äußeres Teilpaket, wobei alle Statorbleche des inneren Teilpakets mit einer jeweils gleichen Geometrie und alle Statorbleche des äußeren Teilpakets mit einer jeweils gleichen Geometrie ausgebildet sind, und wobei die Statorbleche des inneren Teilpakets zur Ausbildung der innen liegenden Statornuten und die Statorbleche des äußeren Teilpakets zur Ausbildung der außen liegenden Statornuten zueinander entgegengesetzt verdreht gestapelt werden. In diesem Fall können alle Bleche des jeweils inneren und äußeren Pakets in derselben Geometrie ausgeführt sein, wodurch der Herstellungsprozess sehr wirtschaftlich wird.Für alle parallel angeordneten bzw. gestapelten Statorbleche des inneren Teilpakets kann somit die gleiche Stanzform eingesetzt werden kann und für alle parallel angeordneten bzw. gestapelten Statorbleche des äußeren Teilpakets kann die gleiche Stanzform eingesetzt werden. Zwei benachbarte Statorbleche des inneren Teilpaktes werden in eine erste Richtung leicht zu einander um einen vorbestimmten Winkel um die Mittelachse verdreht und zwei benachbarte Statorbleche des äußeren Teilpaktes werden in eine zweite Richtung leicht zu einander um einen vorbestimmten Winkel um die Mittelachse verdreht. Auf diese Weise werden die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht. Auf diese Weise lassen sich mit geringem Fertigungsaufwand die entgegengesetzten Schraubenlinien der Statornuten realisieren.

Gemäß einer weiteren Ausführungsform des Verfahrens weist das Statorblechpaket eine Vielzahl unterschiedlich geformter Statorbleche auf, wobei die Ausnehmungen für die inneren und äußeren Statornuten jeweils in einem gemeinsamen Statorblech integriert sind, und wobei die Steigung der Schraubenlinie durch eine fortwährende Verschiebung der inneren und äußeren Statornuten zueinander von Statorblech zu Statorblech realisiert wird, insbesondere mit einem flexiblen Stanz- oder Laserstrahl-Trennprozess. Dabei werden innere und äußere Statornuten in einem einzigen Statorblech (Lamelle) integriert und der schraubenförmige Verlauf der Statornuten wird durch eine fortwährende Verschiebung der Ausnehmungen zueinander im Trennprozess, beispielsweise mittels eines flexiblen Stanzprozesses oder eines Laserstrahl-Trennprozess, in jedem Einzelblech herbeigeführt. Dies hat den Vorteil, dass mit weniger Teilen auch weniger Fertigungsschritte notwendig sind und das somit entstehende Statorblech bzw. der gesamte Statorkern eine höhere mechanische Festigkeit aufweist.

In einer weiteren Ausführungsform weist das Verfahren ferner den Schritt des Bereitstellens einer Trägereinrichtung, welche zum formschlüssigen Eingriff mit den Leiterstabenden an zumindest einem axialen Ende zur Drehmomentabstützung ausgebildet ist, und den Schritt des formschlüssigen In-Eingriff-Bringens der Trägereinrichtung mit den Leiterstabenden an dem zumindest einen axialen Ende an einer axial zu dem Statorkern versetzt angeordneten Position.

Mit einem auf diese Weise hergestellten Stator lässt sich gemäß einem Aspekt ferner ein Verfahren zur Herstellung einer Radialfluss-Doppelrotormaschine durchführen, mit den weiteren Schritten: Bereitstellen einer mechanisch festlegbaren Basis und einer Trägereinrichtung, welche zum formschlüssigen Eingriff mit der Wicklung an dem zumindest einen axialen Ende zur Drehmomentabstützung ausgebildet ist, und Befestigen der Trägereinrichtung mit der Basis.

Die obigen Ausgestaltungen und Weiterbildungen lassen sich, sofern sinnvoll, beliebig miteinander kombinieren. Insbesondere sind sämtliche Merkmale des Stators auf das Verfahren zur Herstellung eines Stators übertragbar, und umgekehrt. Ferner lassen sich sämtliche Merkmale des Stators auf eine entsprechende Radialfluss-Doppelrotormaschine sowie auf eine Fahrzeugachse mit derartiger Radialfluss-Doppelrotormaschine und/oder ein Fahrzeug mit derartiger Fahrzeugachse übertragen.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1 eine schematische Längsschnittdarstellung eines Stators;

Fig. 2 eine schematische Längsschnittdarstellung einer Radialfluss-Doppelrotormaschine;

Fig. 3 eine Explosionsdarstellung eines Stators gemäß einer Ausführungsform;

Fig. 4 eine Explosionsdarstellung einer Radialfluss-Doppelrotormaschine gemäß einer Ausführungsform;

Fig. 5 eine Explosionsdarstellung einer Radialfluss-Doppelrotormaschine gemäß einer weiteren Ausführungsform;

Fig. 6 eine perspektivische Darstellung der Radialfluss-Doppelrotormaschine gemäß Fig. 5 im montierten Zustand;

Fig. 7 eine perspektivische Längsschnittdarstellung einer Radialfluss-Doppelrotormaschine gemäß einer noch weiteren Ausführungsform;

Fig. 8 eine Explosionsdarstellung eines Statorblechpakets eines Statorkerns;

Fig. 9 eine schematische Längsschnittdarstellung einer Statornut;

Fig. 10 eine perspektivische Darstellung einer Wicklung;

Fig. 11 eine Draufsicht einer Wicklung;

Fig. 12 eine perspektivische Darstellung einer FEM Simulation einer Wicklung unter Last;

Fig. 13 eine perspektivische Darstellung einer FEM Simulation einer Vergleichs-Wicklung mit gerader Ausführung der Leiterstäbe unter Last; und

Fig. 14 ein Ablaufdiagramm eines Verfahrens zur Herstellung eines Stators.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.
In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

BESCHREIBUNG VON AUSFÜHRUNGSBEISPIELEN

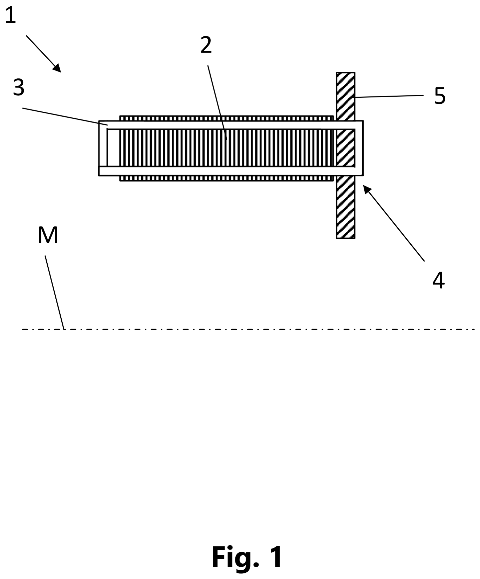

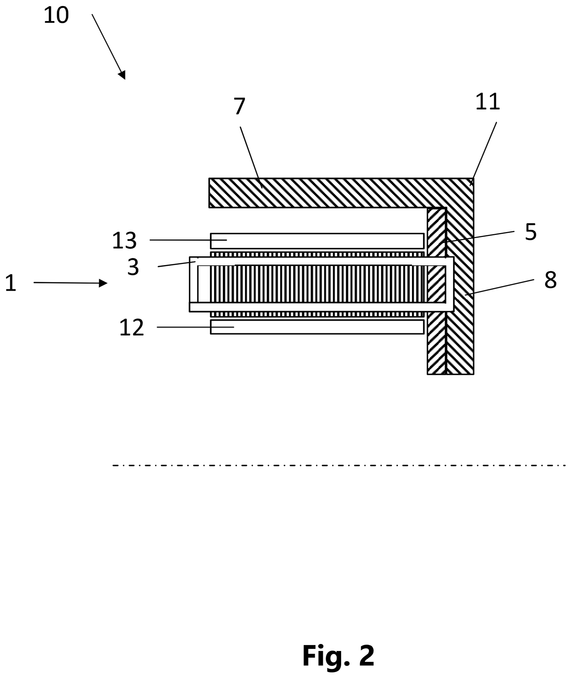

Fig. 1 zeigt eine schematische Längsschnittdarstellung eines Stators 1.
Es handelt sich hierbei um eine Prinzipskizze eines Stators 1 für eine Radialfluss-Doppelrotormaschine 10 (siehe dazu Fig. 2), insbesondere für einen Radnabenmotor. Der Stator weist einen Statorkern 2, eine Wicklung 3 und eine Trägereinrichtung 5 auf. Der Statorkern 2, die Wicklung 3 und die Trägereinrichtung 5 sind rotationssymmetrisch um die eingezeichnete Mittelachse M aufgebaut.
Die Wicklung 3 ist zur Drehmomentabstützung des Stators 1 selbsttragend ausgeführt und ragt an zumindest einem axialen Ende 4 über den Statorkern 2 hinaus. Die Trägereinrichtung 5 ist axial zum Statorkern 2 versetzt angeordnet und ist formschlüssig mit der Wicklung 3 an zumindest einem axialen Ende 4 zur Drehmomentabstützung verbunden. Auf diese Weise kann ein an dem Statorkern 2 im Betrieb einer Radialfluss-Doppelrotormaschine 10 anstehendes Drehmoment mittels der selbsttragenden Wicklung 3 an der Trägereinrichtung 4 abgestützt werden.
Die Wicklung enthält ein Leitermaterial mit geringem elektrischem Widerstand, vorzugsweise Kupfer. Der Statorkern 2 ist bevorzugt aus einem weichmagnetischen Material zur magnetischen Flussführung aufgebaut. Die Trägereinrichtung enthält vorzugsweise ein wärmeleitendendes Material, beispielsweise eine Aluminiumlegierung. Selbstverständlich ist die Wicklung 3 elektrisch isoliert.
Fig. 2 zeigt eine schematische Längsschnittdarstellung einer Radialfluss-Doppelrotormaschine 10.
Auch hierbei handelt es sich um eine rein illustrative Prinzipskizze. Die Radialfluss-Doppelrotormaschine 10 weist demnach zusätzlich zu dem Stator 1 gemäß Fig. 1 eine mechanisch festgelegte Basis 11, einen ersten Rotor 12 und einen zweiten Rotor 13 auf. Der Statorkern 2, die Wicklung 3, die Trägereinrichtung 5, die Basis 11, der erste Rotor 12 und der zweite Rotor 13 sind ebenfalls rotationssymmetrisch um die eingezeichnete Mittelachse M aufgebaut.

Die Wicklung 3 ist zur Drehmomentabstützung des Stators 1 selbsttragend ausgeführt und ragt an zumindest einem axialen Ende 4 über den Statorkern 2 hinaus und ist über die Trägereinrichtung 5 an der Basis 11 abgestützt. Die Trägereinrichtung 5 ist dazu axial zum Statorkern 2 versetzt angeordnet und ist formschlüssig mit der Wicklung 3 an zumindest einem axialen Ende 4 zur Drehmomentabstützung verbunden. Die Trägereinrichtung 5 ist wiederum mit der Basis befestigt, sodass das Drehmoment über die Trägereinrichtung 5 an der Basis 11 abstützbar ist.

Der erste Rotor 12 ist radial innerhalb des Statorkerns 2 und der zweite Rotor 13 ist radial außerhalb des Statorkerns 2 angeordnet. Die Basis 11 kann beispielsweise als Gehäuse der Maschine ausgebildet sein und umfasst hier rein illustrativ eine als L-förmig ausgebildete Struktur, die mit zwei Schenkeln 7, 8 dargestellt ist. Die Darstellung ist nicht als abschließend zu verstehen, vielmehr kann die Basis weitere Komponenten und/oder strukturelle Abschnitte aufweisen. Der erste Schenkel 7 verläuft im Wesentlichen radial, der zweite Schenkel 7 im Wesentlichen axial mit dem größten Abstand zur Mittelachse M.

Rein schematisch ist die Trägereinrichtung 5 radial verlaufend einteilig dargestellt, sie kann aber auch mehrteilig und/oder mit einer anderen zum Formschluss mit der Wicklung 3 ausgebildeten Geometrie vorgesehen sein. Der dargestellte Überlapp der Wicklung 3 mit der Basis 11 ist rein der illustrativen schematischen Darstellung geschuldet und bedeutet keine direkte Verbindung. Die Wicklung 3 ist vorzugsweise über das Trägerelement 5 mit der Basis 11 zur Drehmomentabstützung verbunden.

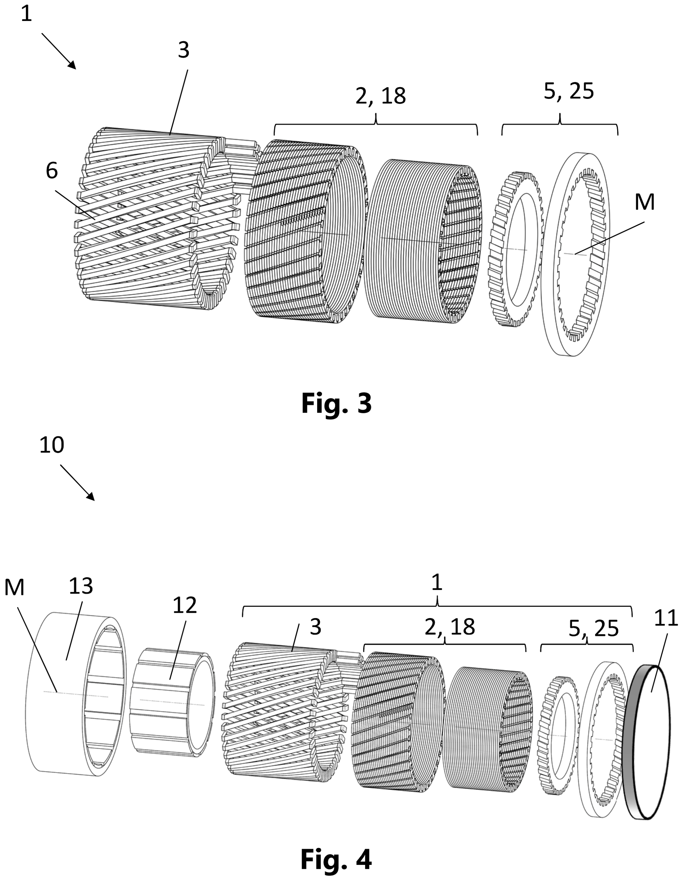

Fig. 3 zeigt eine Explosionsdarstellung eines Stators 1 gemäß einer Ausführungsform.

Der Stator 1 weist eine Wicklung 3, einen Statorkern 2 und eine Trägereinrichtung 5 auf, wobei hier eine vorteilhafte beispielhafte Ausführung dieser Komponenten genauer perspektivisch dargestellt ist.

Die Wicklung 3 ist aus einer inneren und äußeren Lage mit mehreren miteinander stabwerkartig verbundenen Leiterstäben 6 aufgebaut. Die Leiterstäbe 6 in den inneren und äußeren Lagen sind einander entgegengesetzt schraubenförmig angeordnet und an den Leiterstabenden mit einem die innere und äußere Lage verbindenden radialen Leiterstück 17 stoffschlüssig gekoppelt.

Die Dicke der inneren und äußeren Lage entspricht jeweils der Dicke eines Leiterstabs 6. Das heißt, die Wicklung 3 ist durch eine einzige die Leiterschlaufe bildenden Leiterschicht mit einem vergleichsweise großen Querschnitt in Form jeweils eines Leiterstabs 6 gebildet.

Durch die mit den Leiterstäben gebildete Stabwerkstruktur ist die Wicklung torsionssteif und dadurch zur Drehmomentabstützung selbsttragend ausgebildet.

Die Leiterstäbe 6 bilden dementsprechend wellenförmige Wicklungsstränge und lassen sich durch entsprechende, dem Fachmann bekannte und daher nicht weiter beschriebene Verschaltungen, wie beispielsweise Dreieckschaltung, Sternschaltung oder dergleichen, zu einer drehfelderzeugenden Wicklung beliebiger Strangzahl verschalten.

In der dargestellten Ausführungsform sind der Statorkern 2 und die Trägereinrichtung 5 beispielhaft jeweils aus zwei Komponenten aufgebaut.Für den Zusammenbau des Stators 1 werden die Wicklung 3, der Statorkern 2 und die Trägereinrichtung 5 ineinander verschachtelt angeordnet. Die Komponenten sind nach Zusammenbau koaxial zueinander ausgerichtet an der gemeinsamen Mittelachse M. Die hier beispielhaft zweiteilige Trägereinrichtung 5 ist axial versetzt zu den anderen Komponenten angeordnet und bildet die innerste und äußerste Komponente des Stators 1. Es handelt sich um einen inneren Ring und einen äußeren Ring, die jeweils mit Nuten zum formschlüssigen Eingriff mit den Leiterstäben ausgebildet sind.

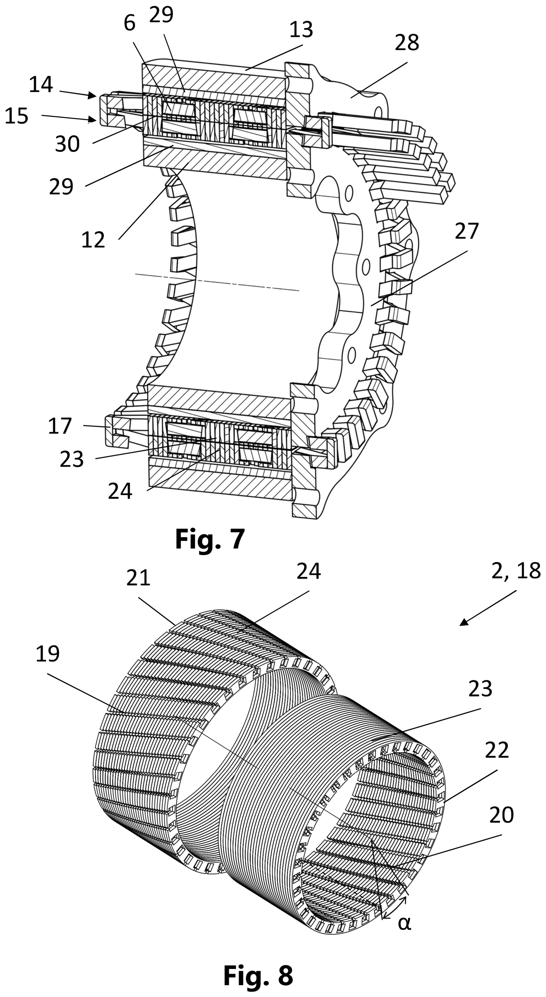

Der hier beispielhaft zweiteilige Statorkern 2 ist mit zwei schraubenförmig gegeneinander verdrehten Statorblechpaketen 18 gebildet, worauf in Bezug auf Fig. 8 weiter im Detail eingegangen wird.

Der Statorkern 2 und die Trägereinrichtung 5 können bei weiteren Ausführungsformen jeweils auch einteilig oder mit mehr als zwei Teilen ausgeführt werden.

Fig. 4 zeigt eine Explosionsdarstellung einer Radialfluss-Doppelrotormaschine 10 gemäß einer Ausführungsform.

Die Radialfluss-Doppelrotormaschine 10 weist, zusätzlich zu den Komponenten des Stators 1, einen ersten Rotor 12, zweiten Rotor 13 und eine Basis 11 auf. Der erste Rotor 12 ist radial innerhalb und zweite Rotor 12 radial außerhalb des Statorkerns 2 angeordnet. Die Rotoren 12, 13 sind bevorzugt aus einem weichmagnetischen Vollmaterial gefertigt und an der jeweiligen dem Statorkern zugewandten Oberfläche mit Permanentmagneten, sogenannten Oberflächenmagneten, als Pole besetzt. Bei weiteren Ausführungsformen können auch andere dem Fachmann bekannte Rotoren eingesetzt werden, beispielsweise mit vergrabenen Magneten, Kurzschlussläufer oder elektrisch erregte Läufer.

Die Basis 11 ist hier zur besseren Übersichtlichkeit lediglich schematisch dargestellt. Wie in der Beschreibung von Fig. 2 bereits beschrieben, ist die Basis 11 im montierten Zustand mit der Trägereinrichtung 5 befestigt. Die Basis 11 ist mechanisch gegenüber einem Bezugssystem, beispielsweise einem Träger einer Fahrzeugachse, festgelegt.

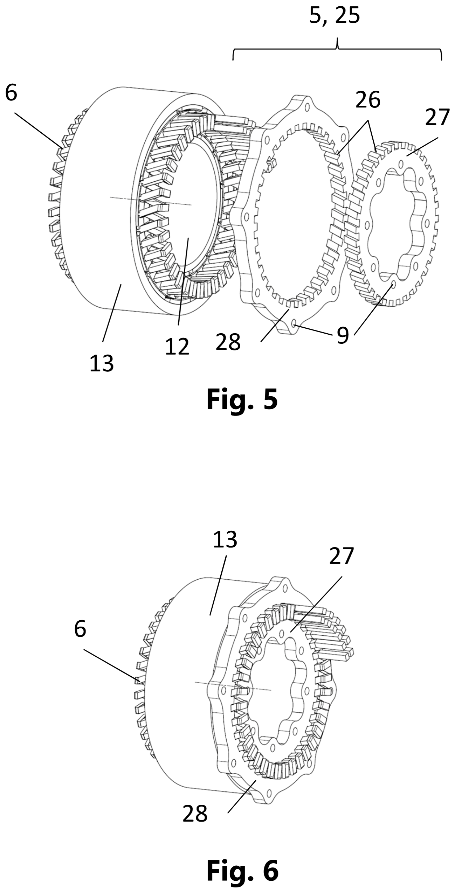

Fig. 5 zeigt eine Explosionsdarstellung einer Radialfluss-Doppelrotormaschine 10 gemäß einer weiterer Ausführungsform.

Die Radialfluss-Doppelrotormaschine 10 weist hier im Wesentlichen gleiche Komponenten auf, wie in Bezug auf Fig. 3 und 4 ausgeführt. An der linken Seite der Figur sind im zusammengebauten Zustand der Statorkern 2, die Wicklung 3, der erste Rotor 12 und der zweite Rotor 13 dargestellt.

Die rechts dargestellte Trägereinrichtung 5 ist ebenfalls zweiteilig ausgeführt und unterscheidet sich durch die Ausgestaltung des jeweils ringförmigen inneren Trägerelements 27 und äußeren Trägerelements 28. Die Trägerelemente 27, 28 sind hier mit Trägernuten 26 ausgestattet. Diese sind bei dem äußeren Trägerelement 28 am inneren Umfang und bei dem inneren Trägerelement 27 am äußeren Umfang zum Eingriff mit den Leiterstäben 6 der Wicklung 3 vorgesehen.

Die Trägernuten 26 sind dazu entsprechend dem schraubenförmigen Verlauf der Leiterstäbe bzw. dessen Steigung axial angewinkelt ausgebildet, so dass sie mit den Leiterstäben 6 der Wicklung 3 in Eingriff gebracht werden können.

Die Trägerelemente 27, 28 sind bevorzugt aus einem leitenden Metall hergestellt, besonders bevorzugt aus einer Aluminiumlegierung. Die zweiteilige Ausführung der Trägerelemente 27, 28 ermöglich es, dass die Trägernuten 26 in der Herstellung für eine mechanische bzw. spanende Bearbeitung leicht zugänglich sind.

Das innere Trägerelement 27 und das äußere Trägerelement 28 sind jeweils umlaufend mit mehreren Bohrungen 9 zur Befestigung mit der Basis 11 versehen. Die Bohrungen 9 sind hier beispielhaft entlang eines Lochkreises gleichmäßig am Umfang verteilt angeordnet. Die einzelnen Bohrungen 9 befinden sich etwas außerhalb des Hauptkörpers der Trägerelemente und die Trägerelemente 27, 28 bilden daher an dem jeweils der Wicklung abgewandten Umfang eine Sternform aus. Selbstverständlich sind andere Verteilungen der Bohrungen 9 wie auch andere Arten von Befestigungsmittel für die Verbindung zur Basis 11 denkbar.

Fig. 6 zeigt eine perspektivische Darstellung einer Radialfluss-Doppelrotormaschine 10 gemäß Fig. 5 im montierten Zustand.

Die Trägereinrichtung 5 wird über die Bohrungen 9 beispielsweise in einem Maschinengehäuse (nicht abgebildet) als Basis 11 befestigt und führt so das Drehmoment zum mechanisch festgelegten Teil der Radialfluss-Doppelrotormaschine 10. Auf diese Weise kann das durch die Radialfluss-Doppelrotormaschine 10 erzeugte Drehmoment effektiv abgestützt werden. Die Befestigung der Trägereinrichtung 5 wird über entsprechende Befestigungsmittel (nicht abgebildet), beispielsweise Schrauben, realisiert.

Die Leiterstäbe 6 der Wicklung 3 erstrecken sich axial an beiden Seiten bis außerhalb des Statorkerns 2 und des ersten und zweiten Rotors 12,13. Die schraubenförmig angeordneten Leiterstäbe 6 der radial inneren und äußeren Lage sind jeweils außerhalb des Statorkerns 2 miteinander verbunden.

Die Trägerelemente 27, 28 sind hier im Eingriff mit den Leiterstäben 6 der Wicklung 3 dargestellt. Es ist ersichtlich, dass in jeder Trägernut 26 ein Leiterstab 6 platziert ist, sodass alle Leiterstäbe formschlüssig mit der Trägereinrichtung gekoppelt sind. Somit kann ein über die Wicklung 3 abgestütztes Drehmoment über die Trägereinrichtung 5 an der an den Bohrungen 9 befestigten Basis 11 abgestützt werden.

Fig. 7 zeigt eine perspektivische Längsschnittdarstellung einer Radialfluss-Doppelrotormaschine 10 gemäß einer noch weiteren Ausführungsform.

Diese Ausführungsform entspricht im Wesentlichen dem Zusammenbau einer Radialfluss-Doppelrotormaschine 10 gemäß Fig. 4, auf deren Komponenten nachfolgend im Einzelnen weiter eingegangen wird.

Der Statorkern 2 weist ein inneres Teilpaket 23 und ein äußeres Teilpaket 24 auf. Die Teilpakete 23, 24 verlaufen ringförmig zwischen dem ersten und zweiten Rotor 12,13. Aufgrund der Schnittdarstellung ist es auch, möglich die inneren und äußeren Lagen 14, 15 der innerhalb der Teilpakete 23,24 verlaufenden Leiterstäbe 6 zu sehen.

Bei der dargestellten Radialfluss-Doppelrotormaschine 10 handelt es sich um eine sogenannte "jochlose" Ausführung bei der das Joch zwischen zwei Zähnen nicht im funktionsrelevanten magnetischen Fluss liegt. Zwischen den Leiterstäben 6 verläuft somit zwar ein Statorjoch 30, welches aber lediglich dem mechanischen Zusammenhalt des Statorblechpakets 18 dient. Entsprechend dünn kann eine radiale Jochdicke gestaltet werden, welche in der dargestellten Ausführungsform beispielhaft etwa 10% der gesamten radialen Statordicke beträgt. Mit der vergleichsweise geringen Jochdicke wird zusätzlich unerwünschter magnetischer Streufluss im Joch reduziert. Bei weiteren Ausführungsformen kann zu diesem Zweck die radiale Jochdicke weniger als 30%, vorzugsweise weniger als 20%, besonders bevorzugt weniger als 10% der gesamten radialen Statordicke betragen.

Die Trägereinrichtung 5 weist auch hier ein inneres Trägerelement 27 und ein äußeres Trägerelement 28 auf. Die Trägerelemente 27,28 sind hier gut erkennbar axial versetzt zu dem Stator 5 und den Rotoren 12,13 angeordnet. Ferner ist wenigstens abschnittsweise der formschlüssige Eingriff der Trägerelemente 27,28 mit den Leiterstäben 6 der inneren und äußeren Lagen 14, 15 erkennbar.

Ferner ist hier gut zu erkennen, dass die Leiterstäbe 6 der inneren und äußeren Lagen 14,15 an den Leiterstabenden 16 über ein radial angeordnetes Leiterstabstück 17 verbunden sind. Die Verbindung ist vorzugsweise als stoffschlüssige Verbindung realisiert, beispielsweise durch Laserstrahlschweißen.

Im Schnitt sind ferner die Oberflächenmagnete der Rotoren 12, 13 zu erkennen. Der erste Rotor 12 hat auf seiner äußeren Umfangsfläche mehrere Permanentmagnete montiert. Der zweiter Rotor 13 hat auf seiner inneren Umfangsfläche mehrere Permanentmagnete montiert.

Eine besonders vorteilhafte Ausführungsform ergibt sich, wenn die Rotoren aus weichmagnetischem Vollmaterial und mit oberflächenmontierten Permanentmagneten ausgeführt sind. In dieser Ausführung können die Rotoren sehr kostengünstig gefertigt und ein hoher Wirkungsgrad erreicht werden.

Fig. 8 zeigt eine Explosionsdarstellung des Statorblechpakets 18 des Statorkerns 2.

Das Statorblechpaket 18 des Statorkerns 2 weist, wie bereits erwähnt, ein inneres Teilpaket 23 und ein äußeres Teilpaket 24 auf. Dies dient der einfacheren Herstellung der gegensätzlich zueinander verdrehten Statornuten 19 mit gleichen zueinander verdreht gestapelten und an den gleichen Stellen mit Ausnehmungen versehenen inneren und äußeren Statorblechen 21, 22.

Bei weiteren Ausführungsformen können die Statorbleche auch einteilig ausgeführt sein, sodass eine Vielzahl unterschiedlich geformter Statorbleche mit unterschiedlich angeordneten Ausnehmungen vorgesehen und in der zur Ausbildung der Statornuten nötigen Reihenfolge gestapelt sind. Bei noch weiteren Ausführungsformen sind auch komplett einteilige Statorkerne 2 denkbar, die beispielsweise additiv gefertigt werden können.

Bei der dargestellten zweiteiligen Ausführung ist ein Innendurchmesser des äußeren Teilpakets 24 nahezu gleich mit dem Außendurchmesser des inneren Teilpakets 23. Dies ermöglicht es, das innere Teilpaket 23 koaxial innerhalb des äußeren Teilpakets 24 anzuordnen.

Die Teilpakete 23,24 sind aus einzelnen aufeinander gestapelten ringförmigen Statorblechen 21,22 aufgebaut. Die Statorbleche 21 des äußeren Teilpakets 24 sind mit auf dem äußeren Umfang verteilt positionierten Ausnehmungen zur Ausbildung der äußeren Statornuten 19 gefertigt. Die Statorbleche 22 des inneren Teilpakets 23 sind mit auf dem inneren Umfang verteilt positionierten Ausnehmungen zur Ausbildung der inneren Statornuten 20 gefertigt. Beispielsweise ist eine Fertigung derartiger Statorbleche durch Stanzen aufgrund der Kantengüte und sehr geringen Herstellungskosten vorteilhaft.

Die inneren und äußeren Statornuten 19,20 beschreiben zueinander mit gleicher Steigung entgegengesetzt verlaufende Schraubenlinien, welche durch den eingezeichneten überstrichenen Winkel der Statornuten α charakterisiert werden. Der überstrichene Winkel der Statornuten α lässt sich aus dem Winkel zwischen der Position derselben Statornut auf einer axialen Seite des Statorkerns 2 und auf der anderen axialen Seite des Statorkerns 2 in Bezug auf die Mittelachse M definieren.

Die Statornuten 19,20 sind hier beispielhaft als T-Nuten mit einer rechteckigen Ausnehmung mit verjüngter Öffnung ausgebildet. Diese sind insbesondere zur formschlüssigen Aufnahme von Leiterstäben mit rechteckigem Querschnitt vorgesehen. Selbstverständlich kann die Geometrie der Ausnehmungen bzw. Statornuten an die Leitergeometrie angepasst werden. Denkbar wären dazu auch andere Querschnittsformen.

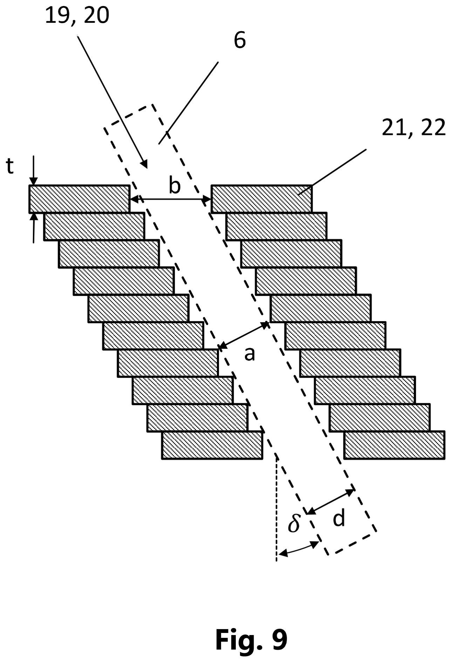

Fig. 9 zeigt eine schematische Längsschnittdarstellung einer Statornut 19, 20.

Die nutzbare bzw. durchgängige lichte Breite a der Statornuten 19,20 innerhalb des Statorblechpakets 18 ist im Wesentlichen gleich der Breite der innerhalb des Statorkerns 2 aufgenommenen Leiterstäbe 6 ausgebildet.

Die Statorbleche 21, 22 weisen gerade, insbesondere gestanzte, Kanten auf. Aufgrund des Versatzes der Bleche zueinander ist eine Breite b der für die Statornuten 19, 20 vorgesehenen Ausnehmungen um einen durch die Steigung δ der Schraubenform des Verlaufs und die Blechstärke t vorbestimmten Betrag größer als die Breite d der Leiterstäbe 6 ausgebildet.

In Fig. 9 ist ein Leiterstab 6 mit gestrichelten Linien in der Statornut 19, 20 schematisch eingezeichnet, wobei die durchgängige lichte Breite a der Statornut 19, 20 zur Bereitstellung einer Spielpassung geringfügig größer als die Breite d des Leiterstabs 6 und die Breite a der Ausnehmung im Statorblech 21, 22 wiederum deutlich größer als die lichte Breite b ausgebildet ist.

Die Blechstärke t und der Anstellwinkel δ der Steigung des Nutverlaufs stellen bei geraden, beispielsweise gestanzten, Blechkanten einen merklichen Einflussfaktor für den Unterschied zwischen der Breite b der Ausnehmung und der lichten Breite a des nutzbaren Durchgangs innerhalb der Nut dar. Der Unterschied kommt zustande, da der Steigungswinkel einerseits und die treppenförmige Stufigkeit des Blechpakets andererseits auszugleichen ist.

Eine Mindestgröße der Breite a der Ausnehmung für den Grenzfall unendlich dünner Bleche, das heißt einer reinen Betrachtung des Steigungswinkels δ des Leiterstabs, wäre hierbei

$$b = 1/\cos(\delta) * d.$$

Um einerseits zusätzlich die tatsächlich vorhandene Blechdicke zu kompensieren und andererseits eine Spielpassung bereitzustellen, welche das Einführen der Leiterstäbe erlaubt, ist die Breite b der Ausnehmung tatsächlich noch größer vorgesehen.

Die Breite b der Ausnehmungen gemäß Fig. 9 ist derart bemessen, dass eine durch den Versatz zwischen den Ausnehmungen der Statorbleche verringerte lichte Breite a der Statornuten 19, 20 eine vorbestimmte Spielpassung mit der Breite d eines in die Statornut einzuführenden Leiterstabs 6 bildet, der Kontakt aber dennoch eng genug ist, um zur gleichmäßig verteilten Kraftübertragung bzw. Drehmomentabstützung zwischen Statorbleckpaket und Wicklung zu dienen. Eine derartige Bemessung ist unter anderem dadurch ermöglicht, dass einerseits jedes Statorblech gleich mit hoher Kantengüte ausgebildet und mit gleichem Versatz verdreht ist, und andererseits in jeder Statornut 19,20 lediglich ein einzelner Leiterstab 6 platziert wird, dessen Maße konstant sind.

Insbesondere handelt es sich in der dargestellten Ausführungsform bei dem Leiterstab 6 um einen Rechteckstab mit mehreren Millimetern Kantenlänge bzw. Breite, beispielsweise im Bereich von 2 mm bis 6 mm, insbesondere im Bereich von 3 mm bis 5 mm. Vorzugsweise kann es sich um ein Rechteckprofil von 5 mm x 3 mm handeln.

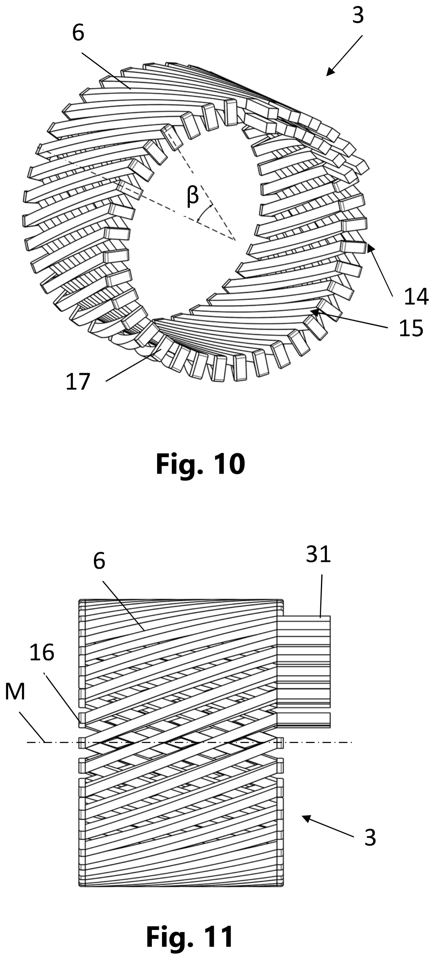

Fig. 10 zeigt eine perspektivische Darstellung einer Wicklung 3.

Die Wicklung 3 ist aus den besagten Leiterstäben 6 aufgebaut, welche schraubenförmig entlang der Mittelachse M verlaufen. Dazu sind die Leiterstäbe 6 nicht nur entsprechend verschränkt angeordnet, sondern auch gemäß dem Schraubenlinienverlauf in sich tordiert.

Der überstrichene Winkel β der Leiterstäbe 6 identifiziert den Winkel zwischen Anfang und Ende eines Leiterstabs 6 relativ zu Mittelachse M. Da die Steigung der Schraubenlinie der Leiterstäbe 6 gleich der Steigung der Schraubenlinie der Statornuten 19, 20 ist, die Leiterstäbe 6 aber länger als die Statornuten ausgebildet sind, lässt sich ein Verhältnis der jeweiligen überstrichenen Winkel α und β zur Charakterisierung der geometrischen Verhältnisse bilden, welches auch als Polbedeckungsgrad bezeichnet wird. Um ein Optimum zwischen magnetischen Verlusten und Drehmomentausnutzung einer Radialfluss-Doppelrotormaschine bereitzustellen liegt dieses Verhältnis (Polbedeckungsgrad)vorzugsweise in einem Bereich zwischen 0.6 und 0.75.

Die entgegengesetzte Verdrehung und Torsion der inneren und äußeren radialen Lagen 14, 15 von Leiterstäben 6 ist hier ebenfalls zu erkenne. Die Torsion ist derart ausgelegt, dass der Querschnitt in Bezug auf eine radiale Linie durch die Mitte des Leiterstabs an jeder Stelle des Leiterstabs stets gleich ist, was auch als 2,5 D Geometrie bezeichnet wird. Somit werden die Leiterstabenden der inneren und äußeren Lagen 14, 15 in einer gleichen Ausrichtung übereinander angeordnet. Die Leiterstäbe 6 der radialen inneren und äußeren Lagen 14, 15 können somit auf einfache Weise leitend verbunden werden, hier beispielhaft über ein radial verlaufendes Leiterstabstück 17, welches mit des Leiterstäben 6 verschweißt wird.

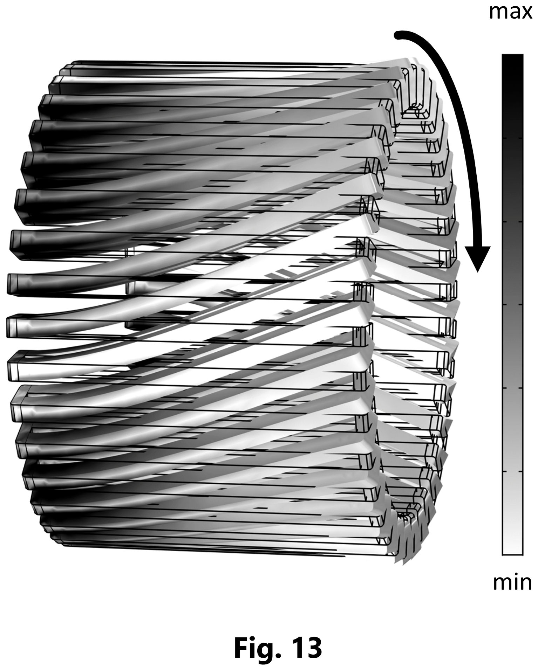

Anzumerken ist, dass die hier dargestellte Wicklung an sich nicht einzeln, sondern stets im Verbund mit dem Statorkern 2 hergestellt wird, worauf in Bezug auf Fig. 13 näher eingegangen wird.

Fig. 11 zeigt eine Draufsicht einer Wicklung 3.

Gut zu erkennen ist in dieser Ansicht die exakt radiale Ausrichtung der Leiterstäbe an jeder Stelle ihres schraubenförmigen Verlaufs, welche in der dargestellten Perspektive im Bereich der Mittelachse M fluchtet. Die Leiterstabenden 16 bilden jeweils den Verbindungspunkt zwischen der inneren und äußeren radialen Lage 14, 15.

In der dargestellten Ausführungsform weist die Wicklung beispielhaft insgesamt zwölf Anschlusskontakte 31 auf. Bei dreisträngiger Verschaltung ist vorzugsweise ein dreiphasiger Betrieb vorgesehen. Die Wicklung ist jedoch in fachmännisch bekannter Weise auf andere Verschaltungen zu einer drehfelderzeugenden Wicklung beliebiger Strangzahl anpassbar.

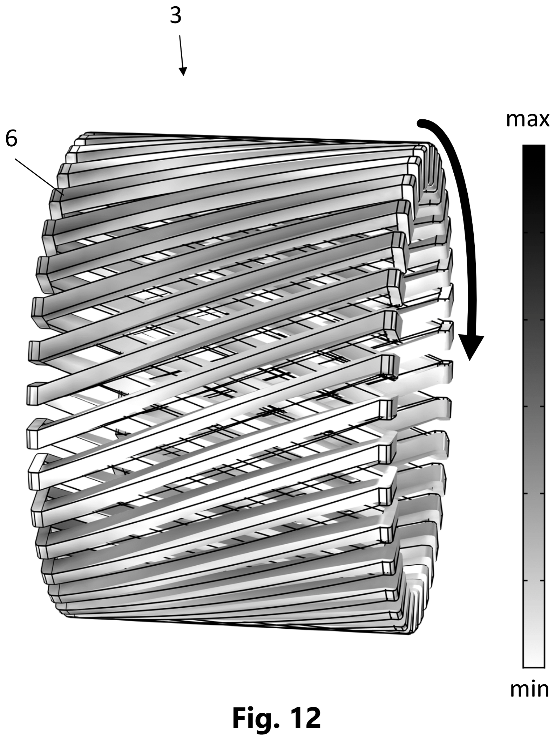

Fig. 12 zeigt eine perspektivische Darstellung einer FEM Simulation einer Wicklung 3 unter Last.

Es handelt sich hierbei mit zu Simulationszwecken geringfügigen Vereinfachungen im Wesentlichen um die in Fig. 10 dargestellte Wicklungsgeometrie. Die dargestellte Skala betrifft die Spannungen innerhalb der Wicklung, wobei es sich beispielhaft im Falle eines Rechteckprofils der Leiterstäbe 6 von 5 mm x 3 mm um eine Skala von 0 MPa bis 30 MPa handeln kann.

Die Leiterstabenden sind in diesem Beispiel durch einen überstrichenen Winkel der Leiterstäbe β > 0 definiert, das heißt schraubenförmig angeordnet und ausgebildet bzw. entsprechend tordiert geformt. An dem axialen Ende, an welchem die Trägereinrichtung eingreift, ist ein mit dickem Pfeil eingezeichnetes maximales Drehmoment der entsprechend dimensionierten Radialfluss-Doppelrotormaschine 10 aufgetragen, wobei es sich beispielhaft im Falle eines Rechteckprofils der Leiterstäbe 6 von 5 mm x 3 mm um etwa 5000 Nm handeln kann.

Erkennbar verteilen sich die Spannungen innerhalb der Wicklung aufgrund der Schraubenliniengeometrie sehr homogen. Trotz eingestellter starker Überhöhung ist kaum eine Verformung zu erkennen. Aufgrund dieser Ausführung sind somit Spannungsspitzen und damit auch die Verformung deutlich reduziert.

Durch die stabwerkartige Struktur kann bei Fixierung eines axial zugänglichen Wicklungsendes somit ein hohes Drehmoment von der Wicklung 3 selbsttragend aufgenommen werden, ohne unzulässig große Verformungen und/oder Spannungszustände hervorzurufen. Das ist insbesondere damit zu begründen, dass in dem Stabwerk die Leiterstäbe 6 bei Beaufschlagung mit Tangentialkraft vorwiegend Zug- und Druckspannungen aufnehmen.

Gegenüber Ausführungen mit achsparallelen, geraden Leitern können die mechanischen Spannungen so signifikant gesenkt werden.

Fig. 13 zeigt eine perspektivische Darstellung eines Vergleichsmodells mit gerader Ausführung und axialem Verlauf der Leiterstäbe 6 unter Last.

Im Vergleich zu Fig. 12 ist aufgrund der geraden Ausführung und des axialen Verlaufs der Leiterstäbe ein auf die in Fig. 12 links dargestellte Seite konzentrierter Spannungsverlauf und eine aus der lokal hohen Spannung resultierende starke Verformung der Leiterstäbe mit großer Auslenkung an der in Fig. 13 rechts dargestellten Seite erkennbar. Es ist hier eine gleiche Spannungsskala und gleiche Überhöhung der Verformung wie in Fig. 12 eingestellt, was die Auswirkung der unterschiedlichen strukturellen Anordnungen auf die Torsionssteifigkeit erkennen lässt.

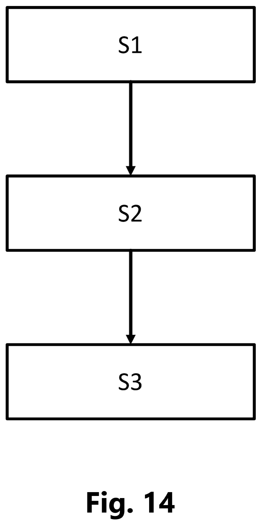

Fig. 14 zeigt ein Ablaufdiagramm eines Verfahrens zur Herstellung eines Stators 1.

Das Verfahren umfasst einen ersten Schritt des Bereitstellens S1 eines Statorkerns 2 mit jeweils eine Schraubenlinie beschreibenden radial außen liegenden Statornuten 19 und jeweils eine Schraubenlinie mit entgegengesetzter Windungsrichtung beschreibenden radial innen liegenden Statornuten 20. Ein weiterer Schritt betrifft das Einführen S2 von einzelnen Leiterstäben 6 den Schraubenlinien folgend durch die inneren und äußeren Statornuten 19, 20. Die Leiterstäbe werden dabei insbesondere in axialer Richtung eingeführt. Des weiteren ist ein Schritt des Verbindens S3 der in die inneren und äußeren Statornuten eingeführten Leiterstäbe 6 an den Leiterstabenden 16 zur Ausbildung von Leiterschleifen vorgesehen.

Weitere Ausführungsbeispiele:

1. Stator (1) für eine Radialfluss-Doppelrotormaschine (10), insbesondere für einen Radnabenmotor, mit:

einem Statorkern (2);

einer in dem Statorkern (2) platzierten Wicklung (3), welche zur Drehmomentabstützung des Stators (1) selbsttragend ausgeführt ist, wobei die Wicklung (3) an zumindest einem axialen Ende (4) über den Statorkern (2) hinausragt; und

einer axial zu dem Statorkern (2) versetzt angeordneten Trägereinrichtung (5), welche zum formschlüssigen Eingriff mit der Wicklung (3) an dem zumindest einen axialen Ende (4) zur Drehmomentabstützung ausgebildet ist.

2. Stator (1) nach Ausführungsbeispiel 1,
**dadurch gekennzeichnet,**

dass die Wicklung (3) derart torsionssteif ausgelegt ist,
dass ein im Betrieb einer Radialfluss-Doppelrotormaschine (10) auf den Statorkern (2) wirkendes Drehmoment über die torsionssteife Wicklung (3) an dem Trägerelement (5), insbesondere vollständig, abstützbar ist.

3. Stator (1) nach Ausführungsbeispiel 1 oder 2,
**dadurch gekennzeichnet,**
dass der Statorkern (2) zur Führung eines vorrangig radialen Magnetflusses ausgebildet ist.

4. Stator (1) nach Ausführungsbeispiel 3,
**dadurch gekennzeichnet,**
dass der Statorkern (2) eine radiale Jochdicke aufweist, welche weniger als 30%, vorzugsweise weniger als 20%, besonders bevorzugt weniger als 10% einer gesamten radialen Statorkerndicke beträgt.

5. Stator (1) nach einem der vorstehenden Ausführungsbeispiele,
**dadurch gekennzeichnet,**
dass die Wicklung (3) aus miteinander, insbesondere stabwerkartig, verbundenen Leiterstäben (6) gebildet ist.

6. Stator (1) nach Ausführungsbeispiel 5,
**dadurch gekennzeichnet,**
dass die Wicklung (3) eine radial innere Lage (15) von schraubenförmig angeordneten Leiterstäben (6) und eine radial äußere Lage (14) von entgegengesetzt schraubenförmig angeordneten Leiterstäben (6) aufweist.

7. Stator (1) nach Ausführungsbeispiel 6,
**dadurch gekennzeichnet,**
dass die radial innere Lage und die radial äußere Lage der Wicklung (3) jeweils die Stärke eines einzelnen Leiterstabes (6) aufweisen.

8. Stator (1) nach Ausführungsbeispiel 6 oder 7,
**dadurch gekennzeichnet,**
dass die Leiterstäbe (6) entsprechend dem schraubenförmigen Verlauf jeweils derart tordiert ausgebildet sind, dass ein Querschnitt eines Leiterstabes bezogen auf eine radiale Achse des Querschnitts an jeder Stelle des Leiters (6) gleich ist.

9. Stator (1) nach einem der Ausführungsbeispiele 6 bis 8,
**dadurch gekennzeichnet,**
dass die einer gleichen Phase der Wicklung (3) zugehörigen Leiterstäbe (6) der radial inneren und äußeren Lage jeweils an den Leiterstabenden (16) miteinander verbunden sind, insbesondere über ein radial angeordnetes Leiterstabstück (17) und/oder mittels stoffschlüssiger Verbindung.

10. Stator (1) nach einem der Ausführungsbeispiele 6 bis 9,
**dadurch gekennzeichnet,**
dass der Statorkern (2) ein Statorblechpaket (18) mit dem Wicklungsverlauf entsprechend schraubenförmig verlaufenden Statornuten (19, 20) enthält, wobei in jeder Statornut (19, 20) des Statorblechpakets (18) ein einzelner Leiterstab (6) angeordnet ist.

11. Stator (1) nach Ausführungsbeispiel 10,
**dadurch gekennzeichnet,**
dass die Statorbleche (21, 22) des Statorblechpakets (18) mit zur Ausbildung der Statornuten (19, 20) vorgesehenen Ausnehmungen jeweils gleich ausgebildet sind, wobei der schraubenförmige Verlauf der Statornuten (19, 20) mittels einer zueinander verdrehten Stapelung der Statorbleche (21, 22) vorgesehen ist.

12. Stator (1) nach Ausführungsbeispiel 11,
**dadurch gekennzeichnet,**
dass das Statorblechpaket (18) ein inneres Teilpaket (23) mit radial inneren Statornuten (20) und ein äußeres Teilpaket (24) mit radial äußeren Statornuten (19) enthält, wobei die Statorbleche (22) des inneren Teilpakets (23) mit einer jeweils gleichen Geometrie und die Statorbleche (21) des äußeren Teilpakets (24) mit einer jeweils gleichen Geometrie ausgeführt sind, und wobei die Statorbleche (22) des inneren Teilpakets (23) und die Statorbleche (21) des äußeren Teilpakets (24) gegensätzlich zueinander verdreht gestapelt sind.

13. Stator (1) nach Ausführungsbeispiel 10,
**dadurch gekennzeichnet,**
dass die Statorbleche (21, 22) mit zur Ausbildung der Statornuten (19, 20) vorgesehenen Ausnehmungen jeweils unterschiedlich ausgebildet sind, wobei der schraubenförmige Verlauf der Statornuten (19, 20) mittels unterschiedlicher Abstände der Ausnehmungen in den einzelnen Statorblechen (21, 22) vorgesehen ist.

14. Stator (1) nach Ausführungsbeispiel 13,
**dadurch gekennzeichnet,**
dass die Ausnehmungen für radial innere und radial äußere Statornuten (19, 20) jeweils in einem gemeinsamen Statorblech (21, 22) integriert ausgebildet sind, wobei der entgegengesetzt schraubenförmige Verlauf der radial inneren und radial äußeren Statornuten (19, 20) durch eine fortwährende Verschiebung der inneren und äußeren Statornuten (19, 20) zueinander von Statorblech zu Statorblech vorgesehen ist.

15. Stator (1) nach einem der Ausführungsbeispiele 11 bis 14,
**dadurch gekennzeichnet,**
dass die Statorbleche (21, 22) gerade, insbesondere gestanzte, Kanten aufweisen, wobei eine Breite (b) der für die Statornuten (19, 20) vorgesehenen Ausnehmungen um einen durch die Steigung ($\delta$) der Schraubenform des Verlaufs und die Blechstärke (t) vorbestimmten Betrag größer als die Breite (d) der Leiterstäbe (6) ausgebildet ist, so dass eine durch den Versatz zwischen den Ausnehmungen der Statorbleche verringerte lichte Breite (a) der Statornuten (19, 20) im Wesentlichen der Breite (d) eines Leiterstabs (6) entspricht.

16. Stator (1) nach einem der Ausführungsbeispiele 10 bis 15,
**dadurch gekennzeichnet**
dass ein von den Statornuten (19, 20) jeweils überstrichener Winkel ($\alpha$) kleiner ist als ein von den Leiterstäben (6) jeweils überstrichener Winkel ($\beta$).

17. Stator (1) nach Ausführungsbeispiel 16,
**dadurch gekennzeichnet**
dass ein Verhältnis des von den Statornuten (19, 20) jeweils überstrichenen Winkels ($\alpha$) zu dem von den Leiterstäben (6) jeweils überstrichenen Winkel ($\beta$) in einem Bereich zwischen 0.6 und 0.8, insbesondere zwischen 0.6 und 0.75 liegt.

18. Stator (1) nach einem der Ausführungsbeispiele 6 bis 17,
**dadurch gekennzeichnet**
dass die Trägereinrichtung (5) ein Trägerelement (25) aufweist, in welchem zu der schraubenförmigen Anordnung der Leiterstäbe (6) korrespondierende und mit den Leiterstäben (6) in Eingriff stehende Trägernuten (26) vorgesehen sind.

19. Stator (1) nach Ausführungsbeispiel 8 und 18,
**dadurch gekennzeichnet**
dass die Trägernuten (26) zumindest abschnittsweise dem schraubenförmigen Verlauf der tordierten Leiterstäbe (6) folgen, insbesondere einen gleichermaßen tordierten Verlauf aufweisen.

20. Stator (1) nach einem der Ausführungsbeispiele 18 oder 19,
**dadurch gekennzeichnet**
dass die Trägereinrichtung (5) ein radial inneres Trägerelement (27) zum Eingriff mit der radial inneren Lage (15) der Leiterstäbe (6) und ein radial äußeres Trägerelement (28) zum Eingriff mit der radial äußeren Lage (14) der Leiterstäbe (6) aufweist.

21. Radialfluss-Doppelrotormaschine (10), insbesondere für einen Radnabenantrieb, mit:

einer mechanisch festgelegten Basis (11);

einem Stator (1) gemäß einem der vorangehenden Ausführungsbeispiele, wobei die Trägereinrichtung (5) zur Drehmomentabstützung in formschlüssigem Eingriff mit dem zumindest einen axialen Ende (4) der Wicklung (3) steht und an der Basis (11) abgestützt ist;

einem radial innerhalb des Statorkerns (2) angeordneten ersten Rotor (12); und

einem radial außerhalb des Statorkerns (2) angeordneten zweiten Rotor (13).

22. Radialfluss-Doppelrotormaschine (10) Ausführungsbeispiel 21,
**dadurch gekennzeichnet**

dass die Trägereinrichtung (5) einen wärmeleitenden Werkstoff, insbesondere ein Metall, vorzugsweise eine Aluminiumlegierung, enthält, wobei die Basis (11) einen Kühlkörper aufweist, der zur Aufnahme von über die Trägereinrichtung (5) aus dem Stator (1), insbesondere aus der Wicklung (3), abgeführter Wärme ausgebildet ist.

23. Radialfluss-Doppelrotormaschine (10) nach Ausführungsbeispiel 21 oder 22, **dadurch gekennzeichnet,** dass sowohl an dem ersten Rotor (12) als auch an dem zweiten Rotor (13) eine vorbestimmte Anzahl von Poolpaaren vorgesehen ist, wobei ein von den Leiterstäben (6) jeweils überstrichenen Winkel (β) zur Ausbildung einer Leiterschleife pro Pol ausgebildet ist.

24. Verfahren zur Herstellung eines Stators (1) für eine Radialfluss-Doppelrotormaschine (10), insbesondere eines Stators (1) nach einem der vorangehenden Ausführungsbeispiele 1 bis 20, mit den Schritten:

Bereitstellen eines Statorkerns (2) mit jeweils eine Schraubenlinie beschreibenden radial außen liegenden Statornuten (19) und jeweils eine Schraubenlinie mit entgegengesetzter Windungsrichtung beschreibenden radial innen liegenden Statornuten (20);

Einführen von einzelnen Leiterstäben (6) den Schraubenlinien folgend durch die inneren und äußeren Statornuten (19, 20); und

Verbinden der in die inneren und äußeren Statornuten eingeführten Leiterstäbe (6) an den Leiterstabenden (16) zur Ausbildung von Leiterschleifen.

25. Verfahren nach Ausführungsbeispiel 24, **dadurch gekennzeichnet,** dass das Bereitstellen des Statorkerns (2) die Herstellung eines Statorblechpakets (18) umfasst, wobei einzelne Statorbleche (21, 22), welche Ausnehmungen zur Ausbildung von Statornuten (19, 20) aufweisen, zueinander verdreht gestapelt werden.

26. Verfahren nach Ausführungsbeispiel 25 **dadurch gekennzeichnet,** dass das Statorblechpaket (18) ein inneres Teilpaket (23) und ein äußeres Teilpaket (24) enthält, wobei alle Statorbleche (22) des inneren Teilpakets (23) mit einer jeweils gleichen Geometrie und alle Statorbleche (21) des äußeren Teilpakets (24) mit einer jeweils gleichen Geometrie ausgebildet sind, und wobei die Statorbleche (22) des inneren Teilpakets (23) zur Ausbildung der innen liegenden Statornuten und die Statorbleche (21) des äußeren Teilpakets (24) zur Ausbildung der außen liegenden Statornuten zueinander entgegengesetzt verdreht gestapelt werden.

27. Verfahren nach Ausführungsbeispiel 25, **dadurch gekennzeichnet,** dass das Statorblechpaket (18) eine Vielzahl unterschiedlich geformter Statorbleche (21, 22) aufweist, wobei die Ausnehmungen für die inneren und äußeren Statornuten (19, 20) jeweils in einem gemeinsamen Statorblech (21, 22) integriert sind, und wobei die Steigung der Schraubenlinie durch eine fortwährende Verschiebung der inneren und äußeren Statornuten (19, 20) zueinander von Statorblech zu Statorblech realisiert wird, insbesondere mit einem flexiblen Stanz- oder Laserstrahl-Trennprozess.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Bezugszeichenliste

| | |
|---|---|
| 1 | Stator |
| 2 | Statorkern |
| 3 | Wicklung |
| 4 | axiales Ende |
| 5 | Trägereinrichtung |
| 6 | Leiterstab |
| 7 | erste Schenkel |
| 8 | zweite Schenkel |
| 9 | Bohrung |
| 10 | Radialfluss-Doppelrotormaschine |
| 11 | Basis |
| 12 | erster Rotor |
| 13 | zweiter Rotor |
| 14 | radial äußere Lage |
| 15 | radial innere Lage |
| 16 | Leiterstabenden |
| 17 | Leiterstabstück |
| 18 | Statorblechpaket |
| 19,20 | Statornuten |
| 21,22 | Statorbleche |
| 23 | inneres Teilpaket |
| 24 | äußeres Teilpaket |
| 25 | Trägerelement |
| 26 | Trägernuten |
| 27 | inneres Trägerelement |
| 28 | äußeres Trägerelement |
| 29 | Permanentmagnet |

| | |
|---|---|
| α | überstrichener Winkel Statornuten |
| β | überstrichener Winkel Leiterstäbe |
| δ | Steigung |

a    lichte Breite
b    Breite der Ausnehmung
d    Breite eines Leiterstabs
M    Mittelachse
t    Blechstärke

**Patentansprüche**

1.    Stator (1) für eine Radialfluss-Doppelrotormaschine (10), insbesondere für einen Radnabenmotor, mit:

einem Statorkern (2);
einer in dem Statorkern (2) platzierten Wicklung (3), welche zur Drehmomentabstützung des Stators (1) selbsttragend ausgeführt ist, wobei die Wicklung (3) an zumindest einem axialen Ende (4) über den Statorkern (2) hinausragt; und
einer axial zu dem Statorkern (2) versetzt angeordneten Trägereinrichtung (5), welche zum formschlüssigen Eingriff mit der Wicklung (3) an dem zumindest einen axialen Ende (4) zur Drehmomentabstützung ausgebildet ist.

2.    Stator (1) nach Anspruch 1,
**dadurch gekennzeichnet,**

**dass** die Wicklung (3) derart torsionssteif ausgelegt ist,
**dass** ein im Betrieb einer Radialfluss-Doppelrotormaschine (10) auf den Statorkern (2) wirkendes Drehmoment über die torsionssteife Wicklung (3) an dem Trägerelement (5), insbesondere vollständig, abstützbar ist.

3.    Stator (1) nach Anspruch 1 oder 2,
**dadurch gekennzeichnet,**
**dass** der Statorkern (2) zur Führung eines vorrangig radialen Magnetflusses ausgebildet ist, insbesondere eine radiale Jochdicke aufweist, welche weniger als 30%, vorzugsweise weniger als 20%, besonders bevorzugt weniger als 10% einer gesamten radialen Statorkerndicke beträgt.

4.    Stator (1) nach einem der vorstehenden Ansprüche,
**dadurch gekennzeichnet,**
**dass** die Wicklung (3) aus miteinander, insbesondere stabwerkartig, verbundenen Leiterstäben (6) gebildet ist, wobei die Wicklung (3) eine radial innere Lage (15) von schraubenförmig angeordneten Leiterstäben (6) und eine radial äußere Lage (14) von entgegengesetzt schraubenförmig angeordneten Leiterstäben (6) aufweist.

5.    Stator (1) nach Anspruch 4,
**dadurch gekennzeichnet,**
**dass** die radial innere Lage und die radial äußere Lage der Wicklung (3) jeweils die Stärke eines einzelnen Leiterstabes (6) aufweisen, und/oder dass die Leiterstäbe (6) entsprechend dem schraubenförmigen Verlauf jeweils derart tordiert ausgebildet sind, dass ein Querschnitt eines Leiterstabes bezogen auf eine radiale Achse des Querschnitts an jeder Stelle des Leiters (6) gleich ist, und/oder dass die einer gleichen Phase der Wicklung (3) zugehörigen Leiterstäbe (6) der radial inneren und äußeren Lage jeweils an den Leiterstabenden (16) miteinander verbunden sind, insbesondere über ein radial angeordnetes Leiterstabstück (17) und/oder mittels stoffschlüssiger Verbindung, .

6.    Stator (1) nach Anspruch 4 oder 5,
**dadurch gekennzeichnet,**
**dass** der Statorkern (2) ein Statorblechpaket (18) mit dem Wicklungsverlauf entsprechend schraubenförmig verlaufenden Statornuten (19, 20) enthält, wobei in jeder Statornut (19, 20) des Statorblechpakets (18) ein einzelner Leiterstab (6) angeordnet ist.

7.    Stator (1) nach Anspruch 6,
**dadurch gekennzeichnet,**
**dass** die Statorbleche (21, 22) des Statorblechpakets (18) mit zur Ausbildung der Statornuten (19, 20) vorgesehenen Ausnehmungen jeweils gleich ausgebildet sind, wobei der schraubenförmige Verlauf der Statornuten (19, 20) mittels einer zueinander verdrehten Stapelung der Statorbleche (21, 22) vorgesehen ist, wobei das Statorblechpaket (18) insbesondere ein inneres Teilpaket (23) mit radial inneren Statornuten (20) und ein äußeres Teilpaket (24) mit radial äußeren Statornuten (19) enthält, wobei die Statorbleche (22) des inneren Teilpakets (23) mit einer jeweils gleichen Geometrie und die Statorbleche (21) des äußeren Teilpakets (24) mit einer jeweils gleichen Geometrie ausgeführt sind, und wobei die Statorbleche (22) des inneren Teilpakets (23) und die Statorbleche (21) des äußeren Teilpakets (24) gegensätzlich zueinander verdreht gestapelt sind.

8.    Stator (1) nach Anspruch 6,
**dadurch gekennzeichnet,**
**dass** die Statorbleche (21, 22) mit zur Ausbildung der Statornuten (19, 20) vorgesehenen Ausnehmungen jeweils unterschiedlich ausgebildet sind, wobei der schraubenförmige Verlauf der Statornuten (19, 20) mittels unterschiedlicher Abstände der Ausnehmungen in den einzelnen Statorblechen (21, 22) vorgesehen ist, wobei die Ausnehmungen für radial innere und radial äußere Statornuten (19, 20) jeweils insbesondere in einem gemeinsamen Statorblech (21, 22) integriert ausgebildet sind, wobei der entgegengesetzt schraubenförmige Verlauf der radial inneren und radial äußeren Statornuten (19, 20) durch eine fortwährende Verschiebung der inneren und äußeren Statornuten (19, 20) zueinander von Statorblech zu Statorblech vorgesehen ist.

9. Stator (1) nach Anspruch 7 oder 8,
**dadurch gekennzeichnet,**
**dass** die Statorbleche (21, 22) gerade, insbesondere gestanzte, Kanten aufweisen, wobei eine Breite (b) der für die Statornuten (19, 20) vorgesehenen Ausnehmungen um einen durch die Steigung ($\delta$) der Schraubenform des Verlaufs und die Blechstärke (t) vorbestimmten Betrag größer als die Breite (d) der Leiterstäbe (6) ausgebildet ist, so dass eine durch den Versatz zwischen den Ausnehmungen der Statorbleche verringerte lichte Breite (a) der Statornuten (19, 20) im Wesentlichen der Breite (d) eines Leiterstabs (6) entspricht.

10. Stator (1) nach einem der Ansprüche 6 bis 9,
**dadurch gekennzeichnet**
**dass** ein von den Statornuten (19, 20) jeweils überstrichener Winkel ($\alpha$) kleiner ist als ein von den Leiterstäben (6) jeweils überstrichener Winkel ($\beta$), wobei ein Verhältnis des von den Statornuten (19, 20) jeweils überstrichenen Winkels ($\alpha$) zu dem von den Leiterstäben (6) jeweils überstrichenen Winkel ($\beta$) insbesondere in einem Bereich zwischen 0.6 und 0.8, vorzugsweise zwischen 0.6 und 0.75 liegt.

11. Stator (1) nach einem der Ansprüche 4 bis 10,
**dadurch gekennzeichnet**
**dass** die Trägereinrichtung (5) ein Trägerelement (25) aufweist, in welchem zu der schraubenförmigen Anordnung der Leiterstäbe (6) korrespondierende und mit den Leiterstäben (6) in Eingriff stehende Trägernuten (26) vorgesehen sind.

12. Stator (1) nach Anspruch 11,
**dadurch gekennzeichnet**
**dass** die Leiterstäbe (6) entsprechend dem schraubenförmigen Verlauf jeweils derart tordiert ausgebildet sind, dass ein Querschnitt eines Leiterstabes bezogen auf eine radiale Achse des Querschnitts an jeder Stelle des Leiters (6) gleich ist und die Trägernuten (26) zumindest abschnittsweise dem schraubenförmigen Verlauf der tordierten Leiterstäbe (6) folgen, insbesondere einen gleichermaßen tordierten Verlauf aufweisen.

13. Stator (1) nach einem der Ansprüche 11 oder 12,
**dadurch gekennzeichnet**
**dass** die Trägereinrichtung (5) ein radial inneres Trägerelement (27) zum Eingriff mit der radial inneren Lage (15) der Leiterstäbe (6) und ein radial äußeres Trägerelement (28) zum Eingriff mit der radial äußeren Lage (14) der Leiterstäbe (6) aufweist.

14. Stator (1) nach einem der vorstehenden Ansprüche,
**dadurch gekennzeichnet,**

**dass** die Trägereinrichtung (5) einen wärmeleitenden Werkstoff, insbesondere ein Metall, vorzugsweise eine Aluminiumlegierung, enthält, wobei die Basis (11) einen Kühlkörper aufweist, der zur Aufnahme von über die Trägereinrichtung (5) aus dem Stator (1), insbesondere aus der Wicklung (3), abgeführter Wärme ausgebildet ist.

15. Verfahren zur Herstellung eines Stators (1) für eine Radialfluss-Doppelrotormaschine (10), insbesondere eines Stators (1) nach einem der vorangehenden Ansprüche 1 bis 14, mit den Schritten:

Bereitstellen eines Statorkerns (2) mit jeweils eine Schraubenlinie beschreibenden radial außen liegenden Statornuten (19) und jeweils eine Schraubenlinie mit entgegengesetzter Windungsrichtung beschreibenden radial innen liegenden Statornuten (20);
Einführen von einzelnen Leiterstäben (6) den Schraubenlinien folgend durch die inneren und äußeren Statornuten (19, 20); und
Verbinden der in die inneren und äußeren Statornuten eingeführten Leiterstäbe (6) an den Leiterstabenden (16) zur Ausbildung von Leiterschleifen.

**Fig. 1**

10

7          11

13          5

3          8

1

12

**Fig. 2**

1

3

2, 18

5, 25

6

M

**Fig. 3**

10

M

13

12

1

3

2, 18

5, 25

11

**Fig. 4**

**Fig. 5**

**Fig. 6**

**Fig. 7**

**Fig. 8**

**Fig. 9**

**Fig. 10**

**Fig. 11**

**Fig. 12**

max

min

**Fig. 13**

```
┌─────────────────────────┐
│                         │
│           S1            │
│                         │
└─────────────────────────┘
             │
             ▼
┌─────────────────────────┐
│                         │
│           S2            │
│                         │
└─────────────────────────┘
             │
             ▼
┌─────────────────────────┐
│                         │
│           S3            │
│                         │
└─────────────────────────┘
```

**Fig. 14**

**IN DER BESCHREIBUNG AUFGEFÜHRTE DOKUMENTE**

**In der Beschreibung aufgeführte Patentdokumente**

- DE 102015226105 A1
- DE 102013206593 A1
- EP 1879283 B1
- JP 2018082600 B

- WO 2004004098 A1
- DE 102010055030 A1
- US 7557486 B2